(19) Europäisches Patentamt
European Patent Office
Office européen des brevets

(11) **EP 1 274 251 A2**

(12) **EUROPEAN PATENT APPLICATION**

(43) Date of publication:
**08.01.2003 Bulletin 2003/02**

(51) Int Cl.$^7$: **H04N 7/26**

(21) Application number: **02254752.5**

(22) Date of filing: **08.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **07.07.2001 GB 0116681**

(71) Applicant: **Sharp Kabushiki Kaisha**
**Osaka-shi, Osaka 545-8522 (JP)**

(72) Inventors:
 • **Hong, Qi, He**
  **Abingdon, Oxforshire OX14 5PT (GB)**
 • **Nomura, Toshio**
  **Tokyo 193-0944 (JP)**

(74) Representative: **Robinson, John Stuart et al**
**Marks & Clerk**
**Nash Court**
**Oxford Business Park South**
**Oxford OX4 2RU (GB)**

(54) **Method and apparatus for segmenting a pixellated image**

(57)    In order to segment a pixellated image having foreground and background regions, a uniform visual characteristic, such as colour, of the background is determined and, from this, a non-occluded background image is generated (55). The generated background image 60 and the image to be segmented 61 are compared, for example using a two-shot segmentation technique 62, and the pixels of the image are allocated as foreground or background pixels.

FIG 3

**Description**

The present invention relates to a method of and an apparatus for segmenting a pixellated image into at least one foreground region and at least one background region. Such techniques may be used in the field of video compression in order to reduce the data rate and/or improve compression quality of foreground regions. Such techniques may also be used to compose new image sequences by replacing a segmented background with another background image or another sequence of background scenes. Further possible applications include video communication, video conferencing, television broadcasting, Internet multimedia applications, MPEG-4 applications such as video compression, face detection applications and real time video tracking systems such as observer tracking autostereoscopic 3D displays.

A specific application of such techniques is in digital video cameras and other digital image capture and recording devices for multimedia applications. An example of such devices is the Sharp® Internet ViewCam VN-EZ series.

Many known image processing and analysis applications involve image sequences which contain *foreground* objects, which are normally temporally active, and a *background* region, which is relatively static. Parts of the background scene may be covered and/or uncovered as the foreground objects move and/or change shape. It is very useful for these applications to have the capability to segment the images into foreground and background regions.

The Sharp® Corporation Internet ViewCam VN-EZ1 is an MPEG-4 digital recorder made for multimedia applications. This recorder enables computer users to incorporate moving pictures into their multimedia applications, such as home pages, Internet broadcasts, and e-mail communications. This recorder uses the MPEG-4 digital moving picture compression standard and Microsoft® Advanced Streaming Format to produce moving picture files that are small in size and thus more practical for Internet distribution. The video data are recorded onto SmartMedia™ memory cards, offering approximately one hour of recording time.

Image capture may, for example, take place in a domestic environment with a plain wall as a static background. A successful segmentation, for example, would enable different compression techniques to be applied to the foreground and background regions. A higher compression ratio may then be achieved, enabling a longer recording time with an improved quality in the foreground regions. In addition, the background regions may be replaced with other scenes to produce a special effect to enhance attractiveness to consumers. New background images may be natural images or computer-generated pictures. A user can store, retrieve, publish and exchange background images and composed images using internet connections and data supply websites, such as Sharp® Spacetown. The capability of creating new images with special effects enhances the attractiveness of such devices to consumers.

This feature may be used to enhance the attractiveness of other mobile devices equipped with image handling capability. An example of this is the Sharp® mobile phone J-SH series. These mobile telephones are equipped with multimedia capability for receiving and sending images as e-mails. Pictures can be displayed by a built-in thin film transistor (TFT) liquid crystal display (LCD). However, mobile phones are often designed to handle individual images rather than video sequences and so are different from the Internet ViewCam, which can deal with both individual images and video sequences.

For mobile phones and other devices which are limited to handling individual images, it is desirable to have the capability of segmenting a single image. It may be possible to segment a single image using techniques for segmenting video sequences, which comprise series of individual images. However, a video sequence contains more information about the foreground and background. For example, the foreground objects could be moving from one image to another while the background remains static. Motion information can be extracted to facilitate segmentation of the foreground and background regions. In practice, techniques used for segmenting a single image may not be the most efficient techniques for segmenting a video sequence. In some situations, it is more difficult to segment a single image than to segment a video sequence.

Earlier systems performed segmentation by using a carefully controlled background such as a uniformly coloured screen or a brightly illuminated backing behind the foreground objects. For example, US5808682 discloses a data compressing system which segments the foreground'objects from a special background, which is illuminated uniformly by a known colour. Any colour may be used but blue has been the most popular. Therefore this type of coloured backing is often referred to as *blue backing.* The foreground objects can then be segmented using well known chroma key technology.

On large coloured backing, it is not a simple matter to achieve uniform illumination. US5424781 discloses a linear image compositing system which corrects for nonuniform luminance and/or colour of the coloured backing without incurring the penalties of edge glow, edge darkening, loss of edge detail and other anomalies.

For black-and-white images, it is known to use a controlled background so as to try to separate the foreground objects and the background scene into two different ranges of the grey scale. Typically the segmentation may be achieved by finding a deep valley in the histogram of the grey levels. Nobuyuki Otsu "A threshold selection method from grey-level histograms", IEEE Trans. on Systems, Man and Cybernetics, Vol. SME-9, No. 1, January 1979 pp.

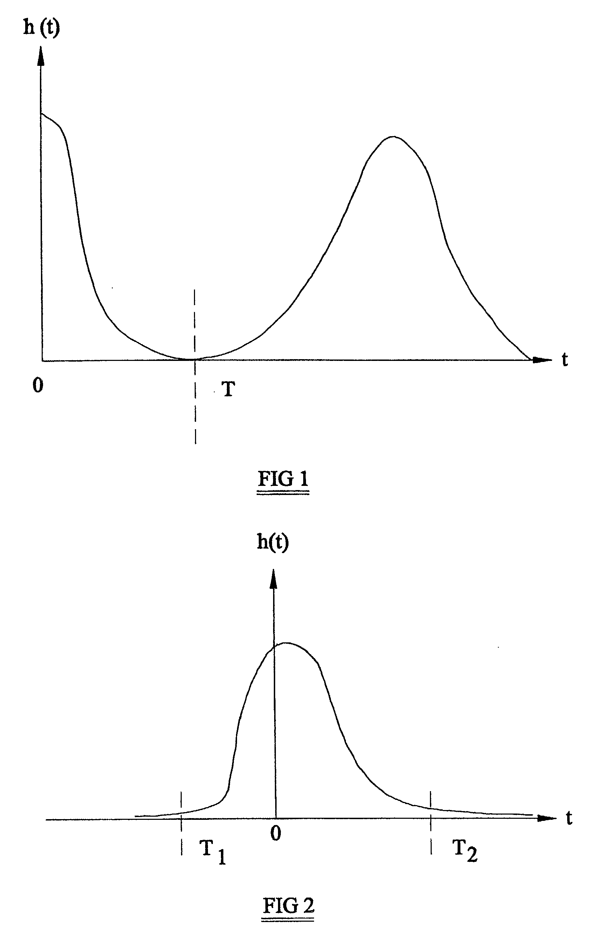

62-66 discloses such a method to find an optimal threshold to segment the foreground objects from their background. Figure 1 of the accompanying drawings illustrates a histogram of this type in which h(t) represents the number of pixels and t represents the amplitude of the pixel values. The controlled background is such that the majority of the background pixels have relatively low levels whereas the foreground pixels have levels which tend to occupy a higher range. Otsu attempts to define a threshold T in the valley between the two ranges.

There are several problems with this technique. For example, although Figure 1 indicates that a well-defined valley exists between the background and foreground grey level ranges, this is only the case for very carefully controlled backgrounds and possibly some but certainly not all foregrounds.

If this technique is not restricted to very carefully controlled conditions, then the problems become more severe. In particular, for many if not all images to be segmented, significant numbers of foreground pixels will have levels extending below the threshold whereas significant numbers of background pixels will have levels extending above the threshold. Thus, any threshold T which is chosen will lead to incorrect segmentation.

Another technique for segmenting an image is disclosed in T Fugimoto et al "A method for removing background regions from moving images", SPIE vol. 1606 Visual communications and image processing 1991, imaging processing, pp. 599-606. This technique makes use of both the level and polarity of the pixel values in order to be resistant to lighting intensity fluctuations.

Figure 2 of the accompanying drawings is a histogram with the same axes as Figure 1 but illustrating the effect of lighting intensity fluctuations. In the absence of such fluctuations, the distribution illustrated in the histogram has a narrow peak centred on the vertical axis with symmetrically sloping sides. When a lighting intensity fluctuation occurs, this peak becomes offset horizontally. The technique of Fugimoto et al is to derive asymmetrical positive and negative thresholds T1 and T2 by matching a Gaussian distribution to the actual position of the peak and simulating the remainder of the curve, which is assumed to represent foreground pixel levels, with a constant function. The intersection between the gaussian distribution and the constant function gives the threshold values T1 and T2 for the image being processed. It is then assumed that all pixel values between the thresholds represent noise.

This technique suffers from the same problems as Otsu. Although it may be resistant to lighting intensity fluctuations, the selection of the thresholds cannot be made in such a way that every image which is likely to be encountered will be correctly segmented.

US 5 878 163 discloses an imaging target tracker and a method of determining thresholds that are used to optimally distinguish a target from its background. The target is assumed to occupy a grey level region which is identified from two histograms corresponding to the inner and outer regions of the target, respectively. Both histograms are recursively smoothed and a lookup table of actually observed pixel values is then computed. Two optimal thresholds are selected and are set at respective ends of histogram segments. The likelihood maps adapt over time to the signature of the target. The grey-level distribution of the target is used to select thresholds that pass a band of grey levels whose likelihood of their belonging to the target is high. It is not necessary for an accurate segmentation for this type of application.

JP 10/63855 discloses a method of extracting a desired object region. An image is divided into colour regions, each comprising pixels of similar colours. An area of attention is selected by a user and, if a colour region has a substantial overlap with this area of attention, it is selected as part of the desired object. The entire area comprising all selected colour regions is then defined as the desired object area. This technique may be applied to a still image or a sequence of images. However, it requires a predetermined area of attention and could contain background colour regions which fall into this area.

While these methods may achieve reasonable results of segmentation for the desired applications and are usually computationally efficient, the requirement of having a carefully controlled background that can be distinguished from the target in either intensity or colour severely limits the range of the applications available.

A more challenging task is therefore how to segment the foreground objects from the background of a general scene. These methods often require the calculation of a difference image which characterises the difference between the current frame and a predetermined frame. The predetermined frame could be either a pre-recorded image of the background, or the previous frame, or an image generated from a number of the previous frames.

US 5 914 748 discloses an electronic compositing system for inserting a subject into a different background. The method subtracts from each image of the sequence a pre-recorded image of the background to generate a difference image. A mask image is then generated by thresholding this difference image. The mask image is used to segment the foreground objects from their background. The method is simple to implement but may require manual correction by users to remove large artefacts in both the segmented foreground regions and the background regions.

JP 5-89243 discloses a background image alternation device which uses three consecutive frames to extract an object. Each line is scanned horizontally to detect the whole edge of the object. Such a technique cannot be used with still images and can only extract an object with a relatively simple shape.

JP 6-52311 discloses a method of extracting a moving object comprising three steps. The first step detects static areas in each image. In this step, a difference image is obtained as the absolute values of the direct difference of two consecutive images. The difference image is then compared with a predetermined threshold value to determine the static image area. A second step constructs a background image from all static image areas extracted from all difference images. A third step identifies a moving object by thresholding a difference image derived from the background image formed in the second step and an input image. Such a technique can only be used with a moving object and cannot therefore be used with a still image.

JP 2000-251079 discloses a dynamic picture object extracting technique which uses time-directional luminance histograms. A histogram is constructed for each pixel location to describe the luminance distribution in the temporal direction. The histograms are used to define background pixels and moving object pixels. However, each pixel needs its own histogram so that this technique requires very large amounts of computing power and memory.

Such known techniques are computationally expensive and may not be suitable for fast or even real-time applications, such as the cameras and mobile telephones mentioned hereinbefore, which have limited computing power and memory capacity. Further, it is difficult or impossible to implement such methods efficiently without sacrificing performance.

US 5 848 183 discloses a system and method for generating and utilising histogram data from a scanned document image. The histogram data may be generated using image pixels from within a sample window, whose position and size need to be pre-determined, for example, by the user using a user interface, or using a particular mark or set of marks outlining the sample window boundary. It is then analysed to determine a first grey value having a peak frequency associated with a white background, a second grey value having a peak frequency associated with a black threshold, and a third grey value having a minimum frequency associated with a histogram of the image, and other grey values having a frequency equal to a quarter and/or five-eighths of the peak frequency associated with the first and the second grey values. These various grey values might be used to enhance the image contrast for a reproduction machine.

US 6 043 900 modifies this method to detect the background type of a document being scanned by a scanning system and to determine an optimal method to render the image based on a leadedge histogram developed from scanning the image.

US 5 280 367 discloses a system that converts a scanned image of a complex document into an image where text has been preserved and separated from the background. The system first subdivides the scanned image into blocks and then examines each block pixel by pixel to construct a histogram of the grey scale values of the pixels. The histogram is partitioned into first, middle and last regions. If one or more peaks occur in the first and last regions, and a single histogram peak occurs within the middle region, the pixels are re-examined to determine the frequency of occurrence of pixels having a grey scale level of the middle peak nearby pixels which have a level of a first region peak. If this frequency is high, the middle peak is assumed to be background information. After determining the threshold, the system rescans the block applying the threshold to separate the text from background information within the block.

US 5 831 748 discloses an image processor for a digital copying machine, in particular for quickly removing a ground and a background of a document image. A ground is an area where there is no information being recorded, such as a white base area on white paper. A background is the area lying behind chief objects to be reproduced or a less important part of a document relative to the chief objects. For example, the black characters may be printed on a grey area which forms the background. A histogram is generated for a plurality of regions in a document image, or more preferably for each line. A ground tends to produce a peak at or near the white level, black characters in the document are sparse and scatter widely at low levels in the histogram, while a background tends to occupy a range below the ground range. Three windows of the histogram may be defined to extract characteristic qualities for grounds, backgrounds and characters separately. A window for the ground quantity is determined according to the ground peak and a ground range for removing the ground is determined by using the ground peak and the three frequencies. The image data are then corrected according to the ground range and an image is formed on a sheet of paper according to the corrected data so that the or each ground can be removed without manual intervention.

1999 IEEE Computer Society Conference on Computer Vision and Pattern Recoguition Proceedings, 23-25 June 1999, pp 459-464, Vol. 2, Gordon et al, "Background estimation and removal based on range and colour" discloses a technique for segmenting an image into foreground and background rgions based on combining range segmentation and colour segmentation techniques. Although not described clearly or in detail, the colour segmentation technique appears to be based on analysing a sequence of frames containing moving foreground objects and, in some way, deriving from this a non-occluded background image.

EP 1 115 254, the contents of which are incorporated herein by reference, discloses an efficient technique for segmenting a sequence of pixellated images into foreground and background regions. A difference image is formed as the difference between the image to be segmented and an image of the non-occluded background. The background and foreground regions of a preceding image are analysed so as to provide a noise histogram corresponding to the background regions and a signal histogram corresponding to the foreground regions. A first threshold is derived from the noise histogram as the lowest level such that a predetermined proportion of the background pixels have lower noise levels. A second threshold is derived from the signal histogram as the highest level such that a predetermined proportion of the foreground pixels have higher signal levels.

A difference image is formed as the difference between each pixel of the image to be segmented and the corresponding pixel of a non-occluded background image. Each pixel of the difference image is allocated as a background pixel if the value of the difference image pixel is less than the first threshold and the pixel is surrounded by a majority of neighbouring difference image pixels which are allocated to the background region. Each remaining pixel is then allocated to the foreground region if its value is greater than the second threshold and if it is surrounded by a majority of neighbouring pixels allocated to the foreground region.

The remaining pixels are then allocated as candidate foreground or background pixels by comparison with a third threshold between the first and second thresholds. Each candidate pixel is then allocated as a background pixel if a majority of its neighbouring pixels are already allocated to the background region or are candidate background pixels. Remaining pixels are allocated to the foreground.

Although this technique is very effective for segmenting an image sequence with a static background, it requires a pre-recorded image of a non-occluded background. For example, this may be achieved by capturing one or more initial images of the background before foreground objects can enter the field of view of a camera. This type of method and other methods which compare an image to be segmented with a background image are referred to hereinafter as "two-shot" methods.

The background should remain substantially the same during the entire image capture process so that an image capture device should be mounted on a stable support. This is inconvenient or impossible for many applications. For example, a user may wish to hold a camera while focusing on another person. Once correct focusing has been achieved, the user presses a start button to begin image capture. For convenience, it should be possible to perform segmentation while allowing the camera to move, even if only gradual movement is permitted. Two-shot methods are not suitable for such applications and it is therefore desirable to have a "one-shot" technique, at least in order to start segmentation, without having to have a background image available. Also, for some applications such as where images are downloaded from the internet, there may not be a background image available. A one-shot method is then essential.

There are many situations where there is only one image rather than a sequence of images available for segmentation. Such situations require a "one-frame" method for segmenting a single image without a prerecorded background image. As mentioned hereinbefore, a technique for segmenting a single image may not be sufficiently efficient for segmenting a video sequence. The terms "one-shot" and "one-frame" are therefore used to distinguish the different situations.

According to a first aspect of the invention, there is provided a method of segmenting a pixellated image having at least one foreground region partially occluding a background and at least one non-occluded background region, comprising the steps of:

    (a) determining a first visual characteristic of the at least one background region;
    (b) generating a first non-occluded background image from the first visual characteristic;
    (c) comparing each of at least some of the pixels of the pixellated image with a corresponding pixel of the first background image; and
    (d) allocating each of the at least some pixels as a foreground or background pixel depending at least partly on the result of the step (c).

The first visual characteristic may be a substantially uniform visual characteristic. The first visual characteristic may be a substantially uniform colour.

Each pixel of the pixellated image may be represented by a plurality of colour components, the step (a) may comprise forming a histogram for each colour component of the number of pixels of at least part of the pixellated image for each value of the colour component and detecting the colour component value of each histogram at which the largest pixel number occurs, and the step (b) may comprise ascribing the colour component values to each pixel of the first background image.

The at least part of the pixellated image may be selected manually and may comprise at least part of the at least one background region.

The pixellated image may be of landscape format and the at least part of the pixellated image may comprise side portions thereof.

The pixellated image may be of portrait format and the at least part of the pixellated image may comprise a top portion thereof.

The pixellated image may be of portrait format and the at least part of the pixellated image may comprise top corner portions thereof.

The step (b) may comprise ascribing the first visual characteristic to each pixel of the first background image.

The method may comprise repeating the steps (a) to (d) at least once with the step (a) comprising determining the first visual characteristic of at least some of the pixels allocated as background pixels in the preceding step (d).

The method may comprise the subsequent steps of:

(e) generating a second non-occluded background image comprising a plurality of blocks of pixels, the pixels of each block having a second substantially uniform visual characteristic;

(f) comparing each of at least some of the pixels of the pixellated image with a corresponding pixel of the second background image; and

(g) allocating each of the at least some pixels as a foreground or background pixel depending at least partly on the result of the step (f).

The second visual characteristic may be a substantially uniform colour.

Each second visual characteristic may be determined at least partly by the corresponding visual characteristic of each pixel of the pixellated image corresponding to a pixel of the block and allocated as a background pixel.

Each second visual characteristic may be determined at least partly by the first visual characteristic.

The second visual characteristic of each block may comprise a linear combination of the first visual characteristic and the corresponding visual characteristics of the pixels of the pixellated image corresponding to pixels of the block and allocated as background pixels.

The method may comprise repeating the steps (e) to (g) at least once with each second visual characteristic being determined at least partly by the corresponding visual characteristics of each pixel of the pixellated image corresponding to a pixel of the block and allocated as a background pixel in the preceding step (g).

Each of the blocks may comprise a predetermined number of pixels. Each of the blocks may comprise a square array of pixels. The method may comprise at least one repetition, the or each repetition comprising performing the steps (e) to (g) at least once with a reduced number of pixels in each block.

The method may comprise the subsequent steps of:

(h) generating a third non-occluded background image, in which each pixel corresponding to an allocated background pixel of the pixellated image has a third visual characteristic at least partly determined by the corresponding visual characteristics of the allocated background pixel;

(i) comparing each of at least some of the pixels of the pixellated image with a corresponding pixel of the third background image; and

(j) allocating each of the at least some pixels as a foreground or background pixel depending at least partly on the result of the step (i).

The third visual characteristic may be colour.

The third characteristic of each pixel of the third background image corresponding to an allocated background pixel may comprise a linear combination of the corresponding visual characteristic of the allocated background pixel and the first or second visual characteristic.

In the step (h), each pixel of the third background image corresponding to an allocated foreground pixel of the pixellated image may have the first or second visual characteristic.

The method may comprise repeating the steps (h) to (j) at least once with the background pixel allocation in the step (h) being determined in the preceding step (j).

The steps (c) and (d) may comprise the steps of:

(k) selecting at least one part of the at least one background region;

(l) deriving from values of pixels of the at least one part a first threshold such that a first predetermined proportion of the pixels have values below the first threshold;

(m) forming a difference image as a difference between each pixel of the pixellated image and a corresponding pixel of the first background image; and

(n) allocating each difference image pixel as a background pixel if the value of the difference image pixel is below the first threshold and the values of more than a first predetermined number of neighbouring difference image pixels are below the first threshold.

The steps (f) and (g) may comprise the steps of:

(k) selecting at least part of the at least one background region;

(1) deriving from values of pixels of the at least one part a first threshold such that a first predetermined proportion of the pixels have values below the first threshold;

(m) forming a difference image as a difference between each pixel of the pixellated image and a corresponding pixel of the second background image; and

(n) allocating each difference image pixel as a background pixel if the value of the difference image pixel is below the first threshold and the values of more than a first predetermined number of neighbouring difference image pixels are below the first threshold.

The steps (i) and (j) may comprise the steps of:

(k) selecting at least one part of the at least one background region;
(1) deriving from values of pixels of the at least one part a first threshold such that a first predetermined proportion of the pixels have values below the first threshold;
(m) forming a difference image as a difference between each pixel of the pixellated image and a corresponding pixel of the third background image; and
(n) allocating each difference image pixel as a background pixel if the value of the difference image pixel is below the first threshold and the values of more than a first predetermined number of neighbouring difference image pixels are below the first threshold.

The first predetermined proportion may be between 0.5 and 1 and may be substantially equal to 0.75.
The first predetermined number may be substantially equal to half the number of neighbouring difference image pixels.
The steps (k) to (n) may be repeated at least once with the at least one part in the step (k) comprising the background pixels allocated in the preceding step (n).
Each step (n) may comprise forming a first initial histogram of values of the difference image pixels allocated as background pixels and step (1) may derive the first threshold from a first resulting histogram which comprises the sum of the first initial histogram formed in the preceding step (n) and a first predetermined fraction less than one of the first resulting histogram of the preceding step (1). The first predetermined fraction may be a half.
The method may comprise the steps of:

(o) selecting at least one part of the at least one foreground region;
(p) deriving from values of pixels of the at least one part a second threshold such that a second predetermined portion of the pixels have values above the second threshold; and
(q) allocating each difference image pixel, which is not allocated as a background pixel, as a foreground pixel if the value of the difference image pixel is above the second threshold and the values of more than a second predetermined number of neighbouring difference image pixels are above the second threshold.

The second predetermined proportion may be between 0.5 and 1 and may be substantially equal to 0.75.
The second predetermined number may be substantially equal to half the number of neighbouring difference image pixels.
The steps (o) to (q) may be repeated at least once with the at least one part of the step (o) comprising the foreground pixels allocated in the preceding step (q).
Each step (q) may comprise forming a second initial histogram of values of the difference image pixels allocated as foreground pixels and the step (p) may derive the second threshold from a second resulting histogram which comprises the sum of the second initial histogram formed in the preceding step (q) and a second predetermined fraction less than 1 of the second resulting histogram of the preceding step (p).
The second predetermined fraction may be a half.
The method may comprise allocating each difference image pixel, which is not allocated as a foreground or background pixel, as a candidate background pixel if a value of the difference image pixel is less than a third threshold. The third threshold may be between the first and second thresholds and may be the arithmetic mean of the first and second thresholds.
The method may comprise allocating each difference image pixel, which is not allocated as a foreground or background pixel, as a background pixel if more than a third predetermined number of the neighbouring pixels are allocated as background pixels or as candidate background pixels. The third predetermined number may be half the number of neighbouring difference image pixels.
The method may comprise allocating each difference image pixel, which is not allocated as a foreground or background pixel, as a foreground pixel.
The method may comprise forming a binary mask whose elements correspond to difference image pixels, each element having a first value if the corresponding difference image pixel is allocated as a background pixel and a second value different from the first value if the corresponding difference image pixel is allocated as a foreground pixel.
According to a second aspect of the invention, there is provided an apparatus for segmenting a pixellated image having at least one foreground region partially occluding a background and at least one non-occluded background region, comprising means for determining a visual characteristic of the at least one background region, means for generating a non-occluded background image from the visual characteristic, means for comparing each of at least some of the pixels of the pixellated image with a corresponding pixel of the background image, and means for allocating each of the at least some pixels as a foreground or background pixel depending at least partly on the comparing means.

According to a third aspect of the invention, there is provided an apparatus for segmenting a pixellated image, comprising a programmable data processor and a program for controlling the data processor to perform a method according to the first aspect of the invention.

According to a fourth aspect of the invention, there is provided a storage medium containing a program for controlling a data processor to perform a method according to the first aspect of the invention.

According to a fifth aspect of the invention, there is provided a program for controlling a data processor to perform a method according to the first aspect of the invention.

According to a sixth aspect of the invention, there is provided an image capture device including an apparatus according to the second or third aspect of the invention.

This technique may be used to segment a pixellated image into one or more foreground regions and one or more relatively uniform background regions and does not require a prerecorded image of a non-occluded background.

For segmenting a single image, a user can directly capture the image with a hand-held image capture device and without requiring a stable support such as a tripod. For capturing a sequence of images, the image capture device may also be hand-held so long as any movement is gradual.

At least some embodiments of the invention may be thought of as being derived from a two-shot method, for instance of the type disclosed in EP 1115254, with the associated advantages of robustness and ease of implementation. For example, the robustness of a two-shot method is maintained when segmenting a video sequence. In some embodiments, the quality of the segmentation may be made self-improving as segmentation proceeds. In such embodiments, the segmented results improve the estimation of the noise and signal histograms, which in turn improve the next segmentation to form a loop of continuous improvement.

This technique may be implemented in a computationally efficient way in terms of computing power and memory requirement involving only simply arithmetic operations which may be implemented exclusively using integers. The technique is therefore very suitable for fast and even real-time applications, for example of the type described hereinbefore.

The invention will be further described, by way of example, with reference to the accompanying drawings, in which:

Figure 1 is a histogram illustrating a first known technique for segmenting an image;

Figure 2 is a histogram illustrating a second known technique for segmenting an image;

Figure 3 is a flow diagram showing a method of segmenting an image constituting an embodiment of the invention;

Figures 4 and 5 are histograms illustrating part of an initial step of the method of Figure 3;

Figures 6, 7 and 8 are diagrams illustrating regions which may be selected automatically for calculating noise histograms;

Figure 9 is a flow diagram illustrating part of the method shown in Figure 3;

Figure 10 illustrates diagramatically the generation of a difference image;

Figure 11 shows two histograms illustrating selection of thresholds in the method of Figure 3;

Figure 12 is a flow diagram illustrating a modification of the technique illustrated in Figure 9;

Figure 13 illustrates four-connected and eight-connected neighbourhoods of pixels;

Figure 14 is a flow diagram showing a method constituting another embodiment of the invention;

Figures 15 to 17 are flow diagrams illustrating modifications of the method shown in Figure 3; and

Figure 18 is a block schematic diagram illustrating an apparatus for segmenting an image constituting a further embodiment of the invention.

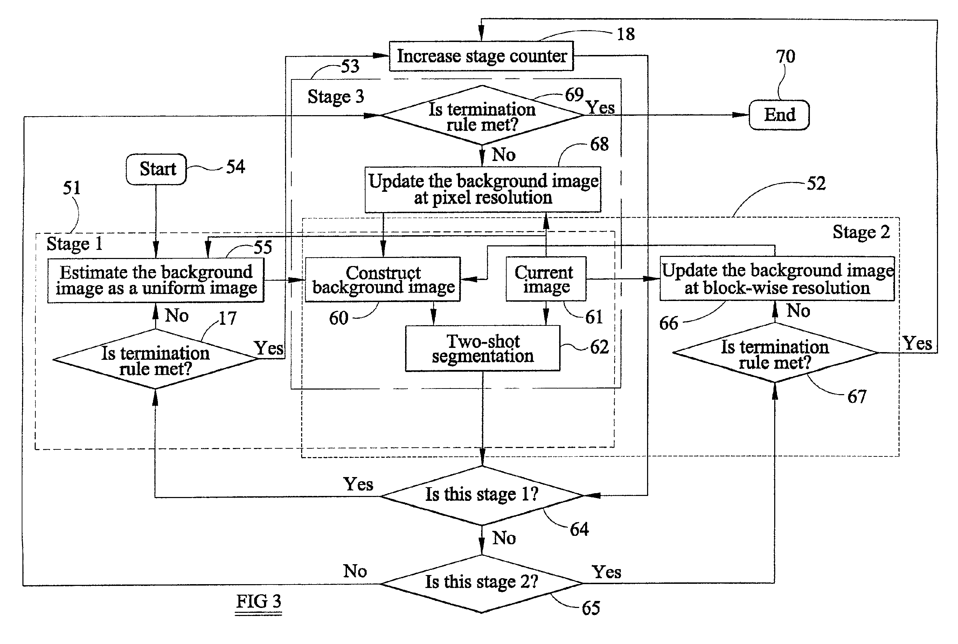

Figure 3 illustrates a method of segmenting an image using three stages 51, 52 and 53. Each of the stages performs an iterative procedure which repeatedly approximates or updates a background image and segments a pixellated image by comparing the image with the estimated background image using a two-shot method based on the technique disclosed in EP 1 115 254. In the first stage 51, the background image is estimated as a completely uniform image. In the second stage 52, the background is updated as a block-wise image. In the third and final stage 53, the background image is updated at individual pixel resolution.

The method starts at 54 and, during the first iteration, the background image is estimated as a uniform image at 55 using the following technique.

A colour image may be represented by a plurality of colour components, such as red (R), green (G) and blue (B) colour components, luminence (Y) and two colour difference components (U, V), or hue (H), saturation (S) and value (V). The present technique may be applied to any colour format but, for convenience and without loss of generality, the application of the technique to RGB components will be described in detail hereinafter. Also, visual characteristics other than colour may be used to estimate and represent the background image and these characteristics include image entropy and texture (for example reprinted by Law's texture parameters).

Each pixel of an image I (x,y) may be denoted as R (x,y), G (x,y), B (x,y), where x and y are discrete spatial coordinates of the pixel. If the pixel represents a foreground object or region, it is referred to as a foreground pixel. If a pixel represents a background region which is not blocked or occluded by a foreground object or region, it is referred to as a background pixel.

The technique is applied to an image in which the background is substantially uniform and comprises one or more regions all of substantially the same colour. Thus, all of the background pixels have the same constant colour components $R_0$, $G_0$, $B_0$, which are thus independent of position.

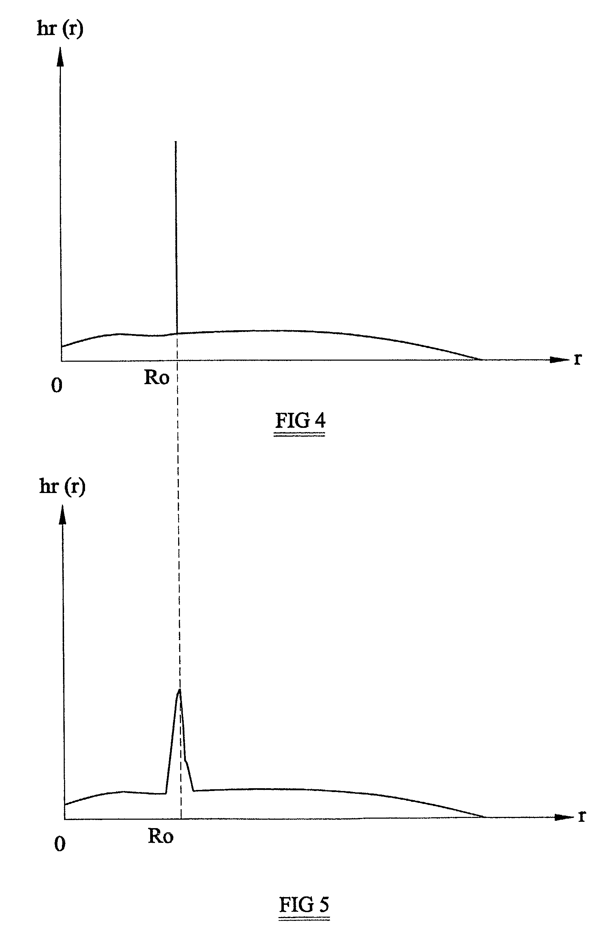

In order to determine, for example, the red component $R_0$, a histogram $h_r$ (r) is generated from the red components of all of the pixels of the image, including foreground pixels. In general, the image pixels have red colour components which spread over a range but, because the background pixels all have the same red colour component value, they form a peak in the histogram at the position $R_0$ as shown in Figure 4. If a sufficient number of background pixels are visible in the image, the peak is generally substantially larger than any other peaks which may be present in the histogram and which may be associated with common red colour components in the foreground regions. Such a peak may readily be identified and its value $R_0$ represents the red colour component of the pixels of the uniform background.

The same histogramming procedure is performed for each of the other colour components so that the values of the three colour components of the background pixels are determined. A uniform background image is then estimated or generated by ascribing the three background colour components to all of the pixels of the background image. This is equivalent to extrapolating the uniform background colour to the occluded background region or regions behind the foreground region or regions.

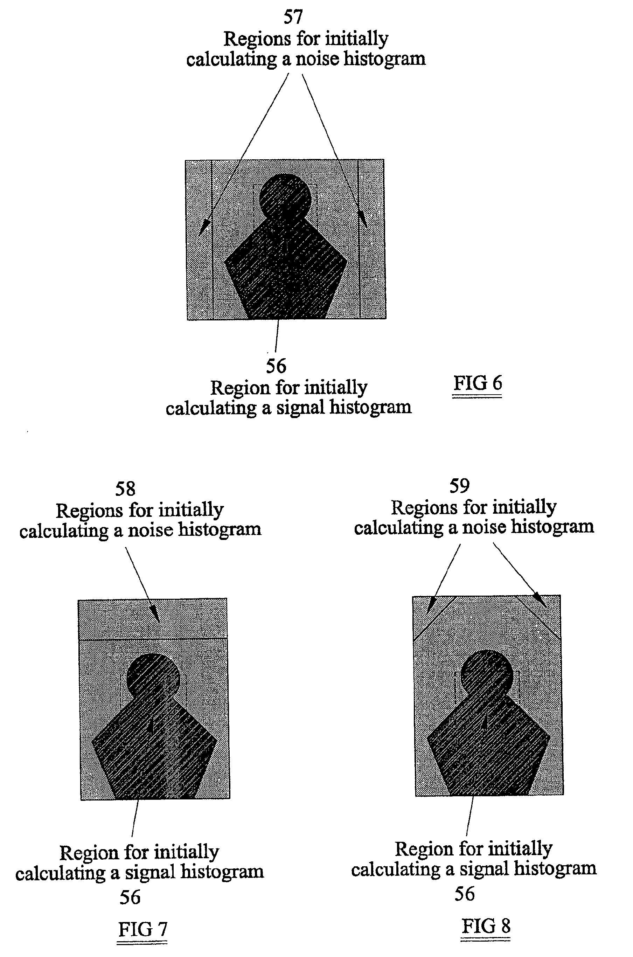

In practice, backgrounds in images are not completely uniform and, even where the actual background is highly uniform, variations occur because of unevenness of the physical surface of the background, background illumination non-uniformity, shadows cast on the background by foreground objects, optical system aberations in an image capture device and electronic noise in an image capture device. It is therefore more usual for the colour components of the background regions to occupy a small range rather than having a single value. This is illustrated in Figure 5, which shows that a broader peak occurs in the histogram with the maximum value corresponding to the commonest colour component value. Again, the red component value $R_0$ of the histogram maximum can be found and the background image is generated by ascribing this value, and the corresponding values of the green and blue components, to all of the pixels of the background image.

It is possible that foreground regions may have a relatively large area of uniform colour which might produce a larger peak in the histogram than that corresponding to the background region. In order to avoid this, background regions in the image may be identified manually or automatically. For example, as illustrated in Figure 6, a target foreground region 56 may be substantially centred in a "landscape format" image with left and right side regions 57 containing only the background, in which case the regions 57 may be selected in order to form the histogram. The selection of such regions may be automatic because it does not need to be particularly accurate so long as the majority of pixels in these regions are background pixels. This technique is thus most likely to be useful for landscape format images.

For portrait format images, other regions are more suitable for being selected to form the histogram. Figure 7 illustrates a typical composition of a portrait format image such that the lower parts generally contain a foreground region with a relatively small background region at the top of the image. In this case, the region 58 at the top of the image may be selected for forming the histogram. As an alternative, Figure 8 illustrates selection of the top corner regions 59 for forming the histogram.

In some application, for example where the segmentation is performed off-line, it may be possible to allow a user to select manually the background region or regions. For example, the image may be displayed on a monitor and a user may use a mouse pointer to select regions for use in forming the histogram.

In such a case, a boundary is drawn on the monitor by a user's operation (for example, an operation of the mouse or an input pen) so as to select a background region. Alternatively, the default boundary is displayed on the monitor, and then the user may change the default boundary.

In the case of, for example, a landscape format image, a boundary between the background region and the foreground region shown in Figure 6 are clearly displayed on the monitor so that the user can check the boundary. When the user determines that the boundary displayed on the monitor is inappropriate, the boundary is translated rightward or leftward by a user's operation (for example, by operating a touch panel, dragging the mouse, or operating buttons of a remote control or a keyboard). When the user determines that the boundary displayed on the monitor is appropriate, the boundary is finalized by a user's operation and thus selection of the background region is terminated.

In the case of a portrait format image, the procedure is similar to the above such that the boundary shown in Figure 7 is checked by the user on the monitor, and if necessary, the boundary is translated upward or downward by a user's operation. Then, the boundary is finalized and thus selection of the background region is terminated.

The boundary shown in Figure 8 may be used instead of the boundary shown in Figure 7. In this case, the boundary is checked by the user on the monitor, and if necessary, the boundary is translated upward or downward, and rightward or leftward by a user's operation. Then, the boundary is finalized and thus selection of the background region is terminated.

The boundary is not limited to a straight line, but may be a zigzag line or a curve. For example, a boundary formed of an ellipse or a curve which represents a rough profile of the upper half of a human body may be prepared in advance. The movement of the boundary is not limited to translation, but may involve rotation and/or deformation (enlargement or reduction of a part of the entirety of the boundary).

Alternatively, a plurality of patterns may be prepared in advance for the boundary such that the user can select one of the patterns to select the background region. The selected pattern is displayed on the monitor. When the user determines that the displayed pattern is inappropriate, the boundary may be moved, rotated and/or deformed until the boundary is ready to be finalized by a user's operation as described above.

In the above, selection of a background region by the user is described. Alternatively, a background region may be obtained by fixing the boundary while moving the camera. More specifically, the user checks an image taken by the camera during the shooting, and adjusts the camera such that the subject is within the foreground region while viewing the boundary displayed on the monitor. The camera may be adjusted by, for example, directly moving the camera or using the zoom function of the camera.

In some application, for example where the segmentation is performed off-line, it may be possible to allow a user to select manually the background region or regions. For example, the image may be displayed on a monitor and a user may use a mouse pointer to select regions for use in forming the histogram.

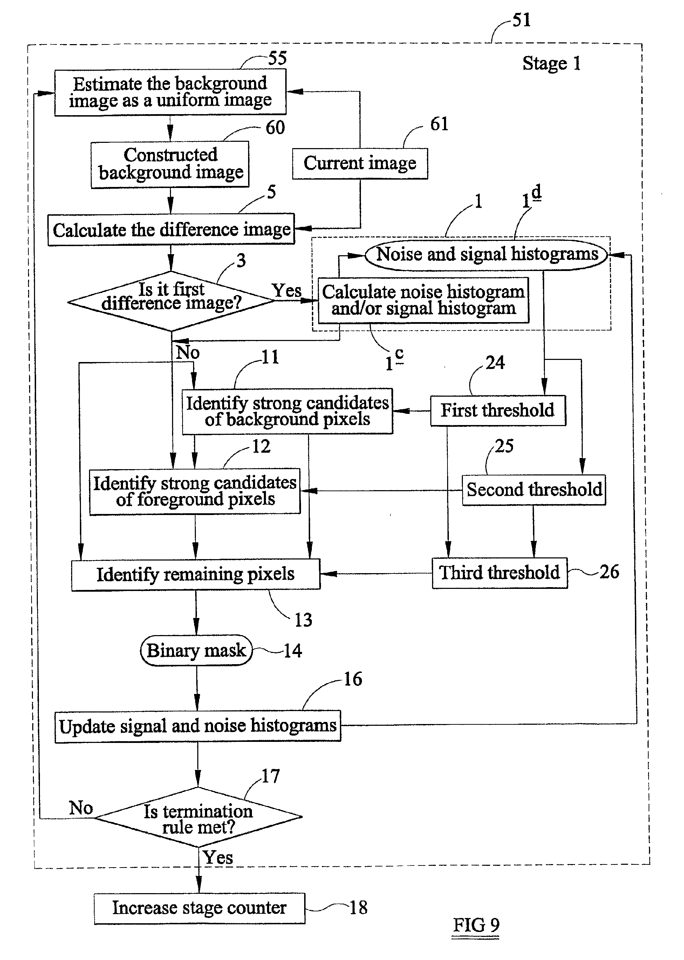

As shown in Figure 3, the estimated or generated background image is supplied as the constructed background image 60, together with the image (where only one image is available for segmentation) or the current image 61 (of a sequence of images) to the two-shot segmentation procedure 62, which is based on the technique disclosed in EP 1 115 254 (the contents of which are incorporated herein by reference) and which is illustrated in Figure 9, which is a block functional diagram in the form of an "augmented" flow diagram illustrating the whole of the first stage 51 in more detail.

This drawing illustrates the supply of data as well as the sequence of steps or operations.

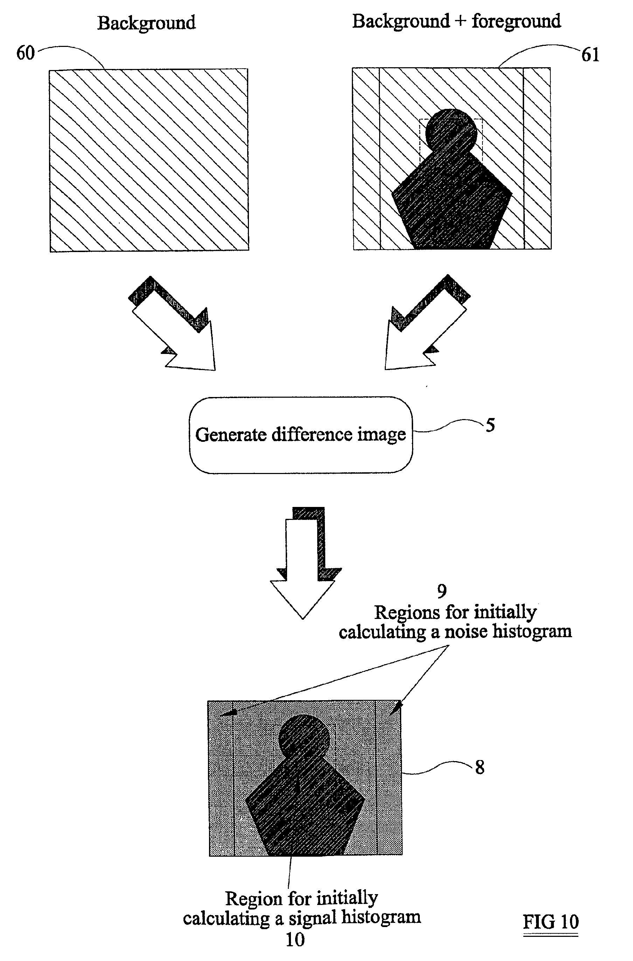

The difference between each pixel of the current image 61 and each corresponding pixel of the constructed background image 60 is calculated at 5 to determine a difference image.
This is illustrated in Figure 10, which shows the background image 60 and current image 61. The step 5 calculates the difference image which is illustrated at 8 in Figure 10. The difference image has a noise region 9 where the pixels have values mainly or wholly representing noise. The image 8 also has a signal region 10 corresponding to the foreground image with the pixels thereof representing a difference between the image pixel and the corresponding background pixel of the background image 60.

A step 3 determines that the difference image is the first such difference image and a step 1c calculates noise and signal histograms 1d from statistical properties of the background and foreground regions 9, 10 of the difference image 8.

After the step 1c or if the step 3 determines that the difference image is not the first difference image, control passes to a step 11, which identifies strong candidates for background pixels in the difference image. In particular, each pixel in turn is compared with a first threshold, which is determined in a step 24 in accordance with the statistical property of the noise determined in the step 1c. Pixels whose values are below the first threshold and which are surrounded by a majority of neighbouring pixels whose values are below the first threshold are allocated to the background region (or one of the background regions where there is more than one such region).

A step 12 identifies strong candidates for foreground pixels by comparing each difference image pixel not allocated to the at least one background region in the step 11 with a second threshold, which is determined in a step 25 in accordance with the signal strength histogram of the signal region 10 determined in the step 1c. Those pixels whose values are greater than the second threshold and which are surrounded by a majority of neighbouring pixels whose values are above the second threshold are allocated to the or each foreground region.

A step 13 then identifies whether the pixels not already allocated to the background or foreground regions should be allocated to the at least one background region or the at least one foreground region. Each such pixel is compared with a third threshold, which is determined in a step 26 from and has a level between the first and second thresholds. Those pixels whose levels are below the third threshold are identified as candidate background pixels. Each of the candidate background pixels is then allocated to the at least one background region if a majority of the neighbouring pixels has already been identified as background pixels or as candidates for background pixels. The remaining pixels are then allocated as foreground pixels.

In each of the steps 11,12 and 13, it is convenient for the whole of the difference image to be thresholded followed by the "spatial filtering" to determine how the pixel is to be allocated. However, for pixels near the edges and corners of each image, the neighbourhood of each pixel is restricted. Although the spatial filtering may be performed in the same way all the way to the image boundary, it may be more appropriate, at least in some applications, to restrict the spatial filtering to a middle portion of the or each image where each pixel has a full complement of neighbouring pixels. This leaves a surrounding margin unfiltered.

For example, if the image size is M×N pixels and the window size used in the spatial filtering is mxn pixels, then the central region comprising (M-m+1)×(N-n+1) pixels is subjected to the spatial filtering and the pixels in the surrounding margin may be spatially filtered using an appropriately smaller window size or may be left spatially unfiltered. For applications where the segmentation does not need to be so precise, the allocation of the pixels in the surrounding margin may be determined solely using the thresholding and without the filtering process.

A step 14 forms a binary mask. In particular, the mask comprises elements corresponding to the pixels of the difference image. Each pixel of the binary mask is ascribed a first value if the corresponding difference image pixel is allocated to the at least one background region or a second value different from the first value if the corresponding difference image pixel is allocated to the at least one foreground region. The binary mask thus represents the desired segmentation and may be used for further processing of the image.

A step 16 updates the signal and noise histograms on the basis of an analysis of the current image of the sequence and the updated histograms are returned to the step 1.

A step 17 determines whether a termination rule is met. If not, control returns to the step 55. Otherwise, a "stage" counter is incremented by one at 18.

Any suitable termination rule may be used in the step 18. For example, stage 1 may be terminated when the number of iterations reaches a predetermined number, which may typically be set to 2 or 3.

During each subsequent iteration, the image is segmented in accordance with the binary mask 14 and the step 55 estimates the background image on the basis of the pixels identified as background pixels. Similarly, the noise and signal histograms are updated in accordance with the statistical properties of the background and foreground pixels as defined by the binary mask 14, which improves the next cycle of segmentation.

The individual techniques used in the method illustrated in Figure 9 will now be described in more detail.

The step 5 defines a difference image, D (x, y) which is given by:

$$D(x, y) = F[I(x, y), B(x, y)]$$

where F is a user-defined measurement that characterises the difference between I (x, y) and B (x, y).

In the simplest case where both I(x, y) and B(x, y) are grey level images, for example, D(x, y) may be defined as their direct difference, i.e.

$$D(x, y) = I(x, y) - B(x, y)$$

In the ideal case where there is no noise, the value of such a D(x, y) is then given by:

$$D(x, y) = \begin{cases} s(x, y) & if\ current\ pixel \in foreground\ objects \\ 0 & if\ current\ pixel \in background \end{cases}$$

where s(x, y) is a measurement of the signal and $\in$ means "is a member of". The term s(x, y) represents a difference measurement between an object pixel and the pixel at the same position in the background image. If all foreground pixels have yielded non-zero signal values, then they can be identified and separated from those background pixels which give a difference measurement of zero.

This simple approach does not work in practice because there is always noise in the image and it is always possible that some object pixels may have identical values to those corresponding pixels in the background image. To include the effect of noise, the last equation may be modified as:

$$D(x, y) = \begin{cases} s(x, y) + n(x, y) & \text{if current pixel} \in \text{foreground objects} \\ n(x, y) & \text{if current pixel} \in \text{background} \end{cases}$$

where the noise term n(x, y) is assumed to be a random variable with a mean value of zero and a variance of σ.

To enable the segmentation of the foreground pixels from the background pixels, the strength of the signal has to be significantly stronger than that of the noise. The above equation may then be rewritten as:

$$D(x, y) = \begin{cases} s(x, y) & \text{if current pixel} \in \text{foreground objects} \\ n(x, y) & \text{if current pixel} \in \text{background} \end{cases}$$

where s(x, y) in the above equation may be regarded as containing an element of noise, which in practice may not be distinguishable from the actual signal itself.

The simplest way to separate the signal term s(x, y) from the noise term n(x, y) is to find a threshold T such that all foreground pixels have signal values exceeding T and all background pixels have noise values below T. A binary masking function may then be derived as:

$$M(x, y) = \begin{cases} 1 & \text{if} \left| D(x, y) \right| \geq T \\ 0 & \text{otherwise} \end{cases}$$

where 1 denotes a foreground pixel and 0 a background pixel.

This is possible with some restrictive conditions, for instance, when the background is in a uniform colour such as deep blue. The difference image D(x, y) may be calculated using equation (3) which is described hereinafter. If the foreground objects do not contain regions of the same deep blue and if the noise level of the imaging system is low, the difference image should have strong signal values for the foreground regions with very small values in the background regions. It is then possible to find a threshold T to separate these signal and noise values.

In practice, this simplistic method may not work satisfactorily for a general scene of the background. For example, some foreground pixels may be similar to the corresponding background pixels and produce signal values that may be below any given threshold T. Similarly, some background pixels may produce noise values above T. There are many possible reasons that might cause this latter problem, including the presence of electronic noise in the imaging system, lighting changes in the background, and/or small disturbances of the imaging system. The multiple thresholds of the present method substantially overcome this problem as described hereinafter.

A commonly used difference measurements between two images I(x, y) and B(x, y) is the colour distance:

$$F\{I, B\} = \sqrt{\alpha(R_I - R_B)^2 + \beta(G_I - G_B)^2 + \gamma(B_I - B_B)^2} \tag{1}$$

where $\alpha$, $\beta$, and $\gamma$ are weighting factors and $(R_I, G_I, B_I)$ and $\{R_B, G_B, B_B\}$ are the RGB colour components for the images I(x, y) and B(x, y), respectively.

It is often tempting to normalise the colour components in the above equation. The normalisation is achieved by dividing each colour component by the sum of the colour components. For example, the $R_I$ component may be normalised as:

$$R'_I = \frac{R_I}{R_I + G_I + B_I}$$

An example of F using such a normalised colour format is given by:

$$F\{I,B\} = \sqrt{\alpha(R'_I - R'_B)^2 + \beta(G'_I - G'_B)^2} + \gamma|Y_I - Y_B|$$

where $Y_I = R_I + G_I + B_I$ and $Y_B = R_B + G_B + B_B$. While this normalisation is useful in reducing the influence due to different lighting intensity, there is a drawback when the value of $Y_I$ or $Y_B$ is very small. The division by a very small value will result in a very large amplification of the noise elements in each colour component, thus making any segmentation method difficult. This normalisation should therefore be applied with care.

To reduce the computing cost, the colour distance measurement described in equation (1) may be approximated as:

$$F\{I,B\} = \alpha|R_I - R_B| + \beta|G_I - G_B| + \gamma|B_I - B_B| \qquad (2)$$

The weighting factors may be pre-determined to reflect the importance of each colour component. A typical set of values, $\alpha=\beta=\gamma=1$, has been found adequate for many applications. This leads to:

$$F\{I,B\} = |R_I - R_B| + |G_I - G_B| + |B_I - B_B| \qquad (3)$$

There are other methods for defining the difference measurement function F. For example, an entropy measurement may be used which is based on the statistical property of the signal and the noise. Such a method may yield better difference characteristics but tends to be more computing intensive.

Based on the difference measurement function F as described by equation (3), the difference image D(x, y) is given by:

$$D(x, y) = \begin{cases} \left| |s_r(x, y)| + |s_g(x, y)| + |s_b(x, y)| \right| & \textit{for foreground pixels} \\ |n_r(x, y)| + |n_g(x, y)| + |n_b(x, y)| & \textit{for background pixels} \end{cases} \qquad (4)$$

where the noise in each colour component is assumed to be a random variable with a mean value of zero and a variance of $\sigma$. These random variables are also assumed to be independent from one colour channel to another and from one pixel to another.

In theory, the values of the noise $n_r$, $n_g$ and $n_b$ can vary from negative infinity to positive infinity. In a real computer implementation, these values may be represented by integers within a finite range, for example from -N to +N, where N is an integer and is typically equal to 255. The values of $|n_r|$, $|n_g|$ and $|n_b|$ then vary from 0 to N.

There is a reason for denoting noise terms as $|n_r|$, $|n_g|$ and $|n_b|$ with the absolute value operator $||$. This will become clearer in the later discussion of noise reduction by imaging averaging, which is applied before the absolute operations are applied. The statistical property of the noise may be estimated initially using a histograming method. For example, if the image I(x, y) contains the background only and is captured at a different time from when B(x, y) is captured, then the difference image D(x, y) represents the noise variable in each pixel. A histogram, $h_n(t)$, may then be constructed by counting the total number of occurrences of a particular noise value t, at which D(x, y)=$|n_r| + |n_g| + |n_b|$ =t. The upper graph of Figure 5 illustrates an example of such a noise histogram.

Theoretically, the value of $|n_r| + |n_g| + |n_b|$ varies from 0 to 3N. This means that $h_n(t)$ should have 3N elements or bins, each being an integer counter. However, the value of $|n_r| + |n_g| + |n_b|$ will be equal to 3N if and only if all the three terms reach their maximum value of N. In practice, the value of $|n_r| + |n_g| + |n_b|$ is likely to be far below this maximum value of 3N. Often it is adequate to use a histogram of only N bins. For those pixels that exceed the value of N, their values can be truncated to N. This is useful when the computing power and the memory storage are limited.

This noise histogram has to be calculated before the segmentation starts. On the other hand, it can only be calculated if the background pixels are already known. One possible solution to these contradictory requirements is to find some likely background regions in the image.

For example, the or each target may be initially positioned at the centre region of the image with some regions 9 on the left and the right margins which contain the background only, as illustrated in Figure 10. The regions 9 on the left and the right margins may be used to estimate the noise histogram.

If the computation is carried out off-line for some applications, it is also possible to allow the user to select manually background regions for estimating the noise property. If the application is implemented on a personal computer (PC), for example, an image may be displayed on the monitor and the user may use a mouse pointer to select a region for this purpose.

Once the difference image is calculated, strong candidates of background pixels are determined first using a first threshold $T_n$. The value of this threshold is so determined that most foreground pixels have signal values above it and most background pixels have noise values below it.

This threshold is determined from the noise histogram $h_n(t)$. Ideally the noise value is bounded so that only the first few bins of the histogram are not zeros. The threshold $T_n$ is then the first value of t, above which the rest of bins are zeros. That is:

$$h_n(t) = 0 \ for \ any \ t \geq T_n$$

Unfortunately, such a near ideal situation does not normally exist.

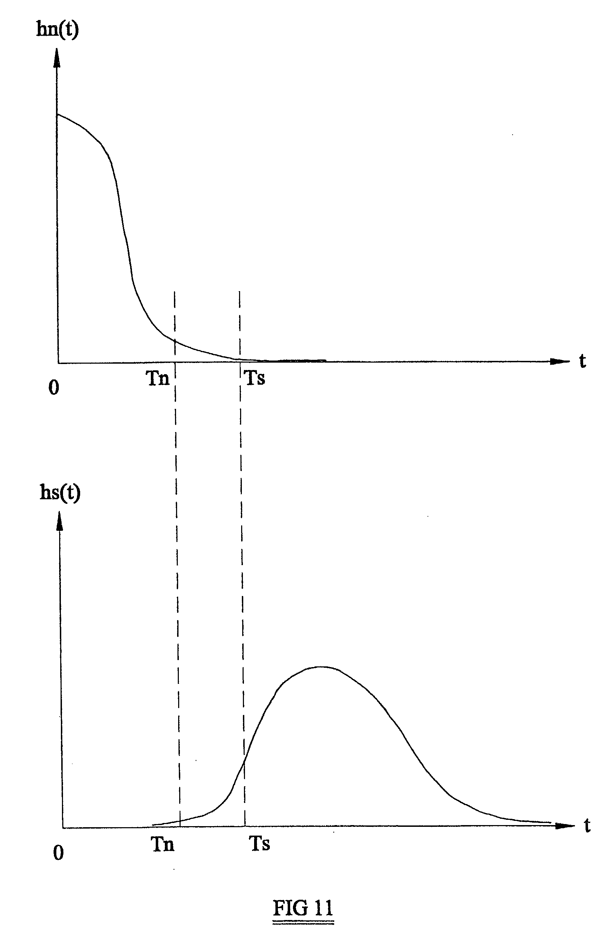

While the histogram may not be all zeros over the higher range of t, the majority of the noise values are usually clustered around the first few bins of the histogram as illustrated in Figure 11. The rest of the bins tend to form a long tail that decreases in general as t increases. The threshold $T_n$ may then be defined as the smallest value of t that is larger than a given percentage of the background pixels.

This threshold $T_n$ is then related to a pre-set percentage value $\eta_n$, where $0.5 < \eta_n \leq 1$. It is determined as the smallest $T_n$ that satisfies the following inequality:

$$\sum_{0}^{Tn} h_n(t) \geq \eta_n \cdot K_n$$

where $K_n$ is the total number of background pixels and is given by:

$$K_n = \sum_{0}^{N} h_n(t)$$

The difference image is then thresholded using the first threshold $T_n$ to identify strong candidates for background pixels. A binary mask is given by

$$M_n(x, y) = \begin{cases} 0 \ if \ |D(x, y)| \leq T_n \\ 1 \quad otherwise \end{cases}$$

where 0 denotes a strong candidate for a background pixel and 1 those other pixels which could be either foreground pixels or background pixels that fail to pass the threshold. Only the strong candidates for background pixels are of interest here.

Those other pixels will be further classified in the processes described hereinafter. For an image I(x, y) con-

taining $K_n$ background pixels, about $\eta_n \cdot K_n$ pixels will have noise values below the threshold $T_n$. The remaining $(1-\eta_n)$ $\cdot K_n$ pixels will have values exceeding this threshold $T_n$ and will fail to be detected as background pixels in this process.

The implicit assumption here is that most of the foreground pixels have signal strengths exceeding the first threshold. It is possible, however, that a small number of foreground pixels might have signal values that fall below this threshold. This simple thresholding method will falsely classify them as background pixels.

If the value of $\eta_n$ is set higher, then the value of $T_n$ is also higher and fewer background pixels will fail to be detected. On the other hand, a larger threshold $T_n$ means it is easier for some foreground pixels to be falsely classified as background pixels. Since an objective of the segmentation is to separate the moving objects from the background, ideally the segmentation should be able to tell any difference between the foreground objects and the background even when the signal values are small. This means that, for segmentation purposes, the smaller the threshold $T_n$ the better. A compromise is therefore necessary and typically $\eta_n$ is set to 0.75.

A true background pixel does not exist in isolation but is always connected to other background pixels. If a pixel is indeed a background pixel, then it is likely that most of its neighbouring pixels are also background pixels. Meanwhile, those foreground pixels that are falsely detected as background pixels often present themselves as small artefacts in the background. This observation leads to the following filtering method to remove these falsely detected pixels.

For each current candidate of background pixel, a small neighbourhood, usually a square window centred at the current pixel, is selected. If the total number of pixels in this window is m, then it is expected that about $\eta_n \cdot m$ pixels are correctly classified as background pixels where $\eta_n > 0.5$. This is correct if the value of m is sufficiently large.

If a background pixel is in the vicinity of a foreground object, the small window may contain some foreground pixels. Intuitively, about half of its neighbouring pixels are background pixels and about half are foreground pixels, even if the current background pixel is adjacent a foreground object. Obviously this is correct only if the window size is sufficient small. This conflicts with the above requirement that m should be "sufficiently large".

A compromise is therefore necessary. Heuristic results show that a typical value of m is 100, thus giving a window size of 9x9 or 11x11 pixels. It is usual to have odd numbers for the window size, so that the current pixel is arranged at the centre of the window.

A candidate for a background pixel may then be accepted or rejected based on the percentage $\psi_n$ of background pixels in this neighbourhood. If $\psi_n$ is larger than or equal to 0.5, then it is accepted; otherwise it is rejected:

$$M_n(x, y) = \begin{cases} 0 & if\ M_n(x, y) = 0\ and\ \psi_n \geq 0.5 \\ 1 & otherwise \end{cases}$$

Computationally, this process may be implemented as a moving window averaging operation applied to the binary image $M_n(x, y)$ followed by a thresholding method with a threshold of 0.5.

Similarly, the strong candidates for foreground pixels may be detected using a second threshold $T_s$, which may be calculated from the signal histogram $h_s(t)$. As indicated earlier, the signal histogram may not be initially available until the first image is segmented. For the first image, this threshold may be simply estimated from $T_n$ and is given as:

$$T_s = \mu T_n$$

where $\mu$ is a real number larger than 1. Typically $\mu$ is set to 1.5 to 2.

The above equation is used only for the initial estimation of the signal strength before the first image is fully segmented. This equation may not be used if there is additional information about the initial position of the foreground targets. If the foreground objects are initially centred at the centre of the image as illustrated in Figure 10, for instance, the central region of the image may then be used to construct the initial signal histogram.

In general, the signal histogram $h_s(t)$ is constructed from the segmented foreground objects, which are available as soon as the first image is segmented. The second threshold $T_s$ is then defined as the largest value of t satisfying the following inequality:

$$\sum_{T_s}^{N} h_s(t) \geq \eta_s \cdot K_s$$

where $0.5 < \eta_s \leq 1$ and $K_s$ is the total number of foreground pixels. A typical value of $\eta_s$ is 0.75.

Normally the threshold $T_s$ is larger than $T_n$. If this is not the case, then it means that the intensity and colour of the moving objects are so similar to the background that their difference is smaller than the noise effect. The segmentation will then become very difficult.

Once the second threshold $T_s$ is obtained, it is used to threshold the difference image to detect strong candidates for foreground pixels. A binary mask is obtained after the thresholding:

$$M_s(x, y) = \begin{cases} 1 & if\ M_n(x, y) = 1\ and\ |D(x, y)| \geq T_s \\ 0 & otherwise \end{cases}$$

Those pixels already identified as strong background pixels do not need to be processed again but they will contribute to the filtering process as described below.

For an image $I(x, y)$ containing $K_s$ foreground pixels, about $\eta_s \cdot K_s$, pixels will have signal values above the threshold $T_s$. The remaining $(1-\eta_s) \cdot K_s$ pixels will have values below this threshold $T_s$ and will not be detected as foreground pixels in this process. As in the detection of the strong candidates for background pixels, there are false detections of background pixels as foreground pixels if the noise values pass the second threshold $T_s$. These falsely detected pixels are normally distributed randomly in isolation and may be removed using a moving window operation similar to the one described hereinbefore. The criterion is also similar. If an initially identified candidate foreground pixel has at least half of its neighbouring pixels as candidates for foreground pixels, then it is confirmed as a foreground pixel; otherwise it is rejected.

$$M_s(x, y) = \begin{cases} 1 & if\ M_s(x, y) = 1\ and\ \psi_s \geq 0.5 \\ 0 & otherwise \end{cases}$$

where $\psi_s$ is the percentage of strong candidates for foreground pixels in the small neighbourhood of the current pixel. The neighbourhood is usually selected as a square window centred at the current pixel. Its size is normally set to 9x9 or 11x11, as for detecting strong candidates for background pixels. Sometimes, if the foreground objects are small, this window size may be reduced.

Those pixels that are neither accepted as strong candidates for background pixels nor as foreground pixels may be classified in a further thresholding and filtering process. A third threshold $T_m$ is introduced and has a value between the thresholds $T_n$ and $T_s$ given by

$$T_m = \alpha T_s + (1-\alpha) T_n$$

where $0 < \alpha < 1$. Typically the value of $\alpha$ may be set to 0.5.

The difference image is thresholded again using this third threshold $T_m$. This time, however, only those remaining pixels need be processed. The new binary mask function is given by:

$$M_m(x, y) = \begin{cases} 1 & if\ M_s(x, y) = 1 \\ 0 & if\ M_n(x, y) = 0 \\ 1 & if\ M_s(x, y) = 0\ and\ M_n(x, y) = 1\ and\ |D(x, y)| \geq T_m \\ 0 & otherwise \end{cases}$$

As in the previous processes, a filtering operation is applied to the "undetermined" pixels. If more than half the pixels in the window are background pixels, then the current pixel is classified as a background pixel and otherwise as a foreground pixel. A binary mask is finally given by

$$M(x, y) = \begin{cases} 1 & if \ M_s(x, y) = 1 \\ 0 & if \ M_n(x, y) = 0 \\ 1 & if \ M_m(x, y) = 1 \ and \ \psi_m \geq 0.5 \\ 0 & otherwise \end{cases}$$

where M(x, y) is the final binary mask and $\psi_m$ is the percentage of foreground pixels in a square window centred at the current pixel to be verified. As before, the window size is normally 9x9 or 11x11 but may be adjusted to fit different sizes of objects.

Once the image is segmented using the binary mask M (x,y), the signal and the noise histograms may be re-calculated using the foreground and background regions, respectively. Also, the image may be saved together with the binary mask. The next image is then obtained and segmented by repeating the above processes.

These steps may be repeated to form an iterative procedure. The signal and noise histograms can then be re-calculated since the foreground and background regions are now initially segmented. These re-calculated signal and noise histograms lead to better estimation of the noise and signal thresholds $T_n$ and $T_s$ for the next iteration.

Alternatively, the signal and noise histograms may be updated using a cumulative procedure. For example, the signal histogram may be updated as:

$$H_s^t(x) = H_s(x) + \lambda H_s^{t-1}(x)$$

where $H_s^{t-1}(x)$ is the previous signal histogram used for segmenting the last frame, $H_s(x)$ is the new histogram obtained using the segmented results of the last frame and $\lambda$ is a constant which has a typical value of 1/2.

This is equivalent to have a weighted histogram from those previous ones, with the closest frame being given a larger weight, e.g.

$$H_s^t(x) = H_s(x) + \frac{1}{2}H_s^{t-1}(x) + \frac{1}{4}H_s^{t-2}(x) + ...$$

Similarly the noise histogram may be calculated using this cumulative method.

As shown in Figure 3, each time the stage counter is increased at 18, steps 64 and 65 determine which of the stages should be performed. Thus, once the termination rule has been met at 17, the stage counter 18 increases the stage count to 2 and the steps 64 and 65 cause the second stage 52 to be performed. The second stage 52 is similar to the first stage 51 and makes use of the same two-shot segmentation 62. However, the second stage differs in that the background image is updated with block-wise resolution at 66.

Although the background image is not generally entirely uniform, the colour changes in the background regions are normally gradual. That is, the colours are almost constant over a small area. An improved estimated image of the background image is therefore constructed as a mosaic of small blocks, each having a constant colour.

For example, the background image may be divided into blocks of m x n pixels and the image may contain k x 1 blocks, giving an image size of mk x nl pixels. Typically m and n are set to the value of 8 or 16, giving a square of 8 x 8 pixels or 16 x 16 pixels. This is related to the block-based processing, for example, in MPEG applications where each block typically contains 16 x 16 pixels in the Y component and 8 x 8 pixels in the U and V components.

For a block at the ith position horizontally and jth position vertically, all pixels are ascribed constant colour values $R_{i,j}$, $G_{i,j}$, $B_{i,j}$, where $0 \leq i < k$ and $0 \leq j < 1$. The values $R_{i,j}$, $G_{i,j}$ and $B_{i,j}$ take into account the "average" colour of the block and may differ from block to block. The initially segmented background and foreground regions provide useful information for this refinement. For example, the value of $R_{i,j}$ may be defined as

$$R_{i,j} = aR_0 + (1 - a)\Delta_{i,j}$$

where $0 < \alpha \leq 1$ and $\Delta_{i,j}$ is given by

$$\Delta_{i,j} = \frac{R_0 + \sum\limits_{(x,y)\,\in\,current\ block} R(x,y) \cdot \big[1 - M(x,y)\big]}{1 + \sum\limits_{(x,y)\,\in\,current\ block} \big[1 - M(x,y)\big]}$$

where R(x,y) is the red colour component of each pixel in the current block and M(x,y) is the binary mask. The more background pixels are in the current block, the more they contribute to the value of $\Delta_{i,j}$.

If there is no background pixel in the current block, the value of $\Delta_{i,j}$ is equal to $R_0$ and so is the value of $R_{i,j}$.

If all pixels in the block are background pixels, then the total number of background pixels is equal to mn. The value of $\Delta_{i,j}$ then represents largely the averaged colour of this block. Typically $\alpha$ is set to 0.5, so that $R_{i,j}$ is about the mean of $R_0$ and $\Delta_{i,j}$.

Similarly the values of $G_{i,j}$ and $B_{i,j}$ are calculated. A background image consisting of a mosaic of these blocks is then constructed, thus giving a better approximation of the true background.

Stage 2 is repeated until a step 67 determines that a termination rule is met. For example, the termination rule may be that a predetermined number, such as between 5 and 10, of iterations has been performed. When the termination rule is met, the stage counter 18 is increased and the steps 64 and 65 cause the third stage 53 to be performed.

The block-wise updating of the background image is an improvement to the absolutely uniform image used at Stage 1. However, it can be further improved, in particular in areas around the boundaries of the foreground objects or where there are more dramatic colour changes in the background. This is achieved at 68 by refinement at a pixel-based resolution so that the background image reflects the actual background as closely as possible.

If a pixel is classified as a background pixel, its value is used directly to update the background image. At a position where a pixel is classified as a foreground pixel, the corresponding pixel in the background image is replaced with the corresponding background pixel value from the second stage 52. The background image and the current image may be described as $\{R_{bg}(x,y), G_{bg}(x,y), B_{bg}(x,y)\}$ and $\{R_1(x,y), G_1(x,y), B_1(x,y)\}$, respectively.

The following is the equation to update the red component of the background image:

$$R_{bg}(x,y) = \begin{cases} R_{i,j} & if\ M(x,y)=1 \\ \alpha R_{i,j} + (1-\alpha)R_{bg}(x,y) & if\ M(x,y)=0 \end{cases}$$

where $0 < \alpha \le 1$ and $R_{i,j}$ is the value from the second stage 52. Typically $\alpha$ is set to ½.

The green and the blue components of the background image are updated in the same way.

A step 69 determines when a termination rule for the third stage 53 is met. For example, the third stage may be terminated when the total number of iterations exceeds a pre-defined number which is typically set between 10 and 20. Segmentation of the image is then complete and the process ends at 70.

The segmentation results can be improved if the noise level can be reduced. As mentioned earlier, the noise terms $n_r$, $n_g$, $n_b$ are independent random variables from pixel to pixel. Here the noise terms are the direct difference before the absolute value operation is applied. On the other hand, the signal values for foreground pixels tend to be correlated with each other over a small neighbourhood. For the red component, for example, a direct difference image $D_r$ may be obtained as:

$$D_r(x, y) = R_I(x,y) - R_B(x, y)$$

If a moving window averaging operation is applied to this image before the absolute value operation is applied, then the noise variance will be reduced while the averaged signal will remain about the same, provided that the window size is small. For simplicity, it is assumed that each of the noise terms $n_r$, ng, $n_b$ has a variance of $\sigma$. For a window size of nxn pixels, the noise variance of the smoothed image is reduced from $\sigma$ to $\sigma/n$. Typically the window size is set to 3x3, so that the noise variance in each colour component is reduced by a factor of 3. This operation may be applied to all three colour components before the absolute value operator is applied to produce the difference image defined by equation (3).

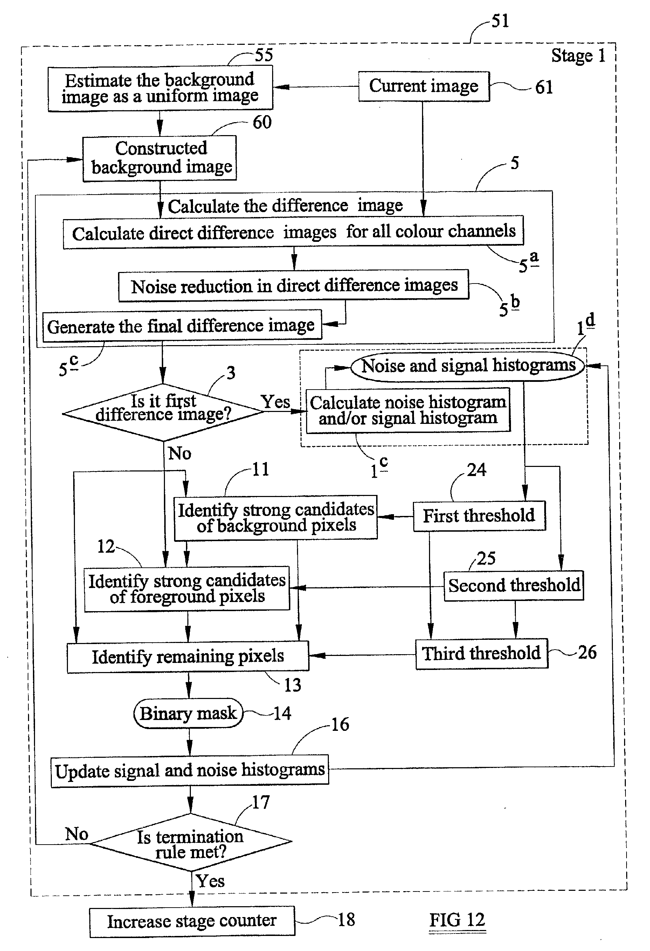

Figure 12 illustrates a method which differs from that illustrated in Figure 9 in that it is modified to include noise reduction. The step 5 comprises sub-steps 5a to 5c. The step 5a calculates the direct difference images for all colour components or channels and the step 5b performs the moving window averaging operation so as to provide noise reduction in each of the direct colour component difference images. The step 5c then generates the final difference image.

The performance of the algorithm is closely related to the uniformity of the background regions in the video images. The colour changes in the background regions make the estimation of the background image difficult, thus resulting in artifacts in the segmented background.

The uniformity of the background regions may be improved by applying a colour transformation method. For example, a logarithm function might be applied to the whole image, so that the colour changes become less significant in the background. Unfortunately the logarithm function also reduces the overall colour ranges, thus making it harder to separate the foreground regions from the background regions.

Since the background is roughly uniform, the colours are clustered around the most common colours and the colour ranges of the background are relatively small in comparison with that of the foreground. Only these colour ranges of the background need to be reduced. This observation leads to the development of a new colour transformation method which is based on a piecewise linear function.

The first step of this method is to determine the most common colours in the background and their ranges. This may be illustrated with the red component. After the first image is segmented, a histogram H(R) is constructed using all pixels in the background. The largest peak is found at position $R_0$, which represents the most common red component in the background. Once the peak is found, a search is carried out from both sides of the peak to determine a colour range $[R_1, R_2]$, where $0 \le R_1 \le R_0$ and $R_0 \le R_2 \le 255$ if the overall colour range is [0, 255]. The values of $R_1$ and $R_2$ are determined in the following procedure:

1. Set $R_1=R_0$ and $R_2=R_0$, and $S=H(R_0)$
2. If $S>\alpha$, where $0<\alpha\le1$, then stop search; otherwise continue
3. If $H(R_2+1) >H(R_1-1)$, then increases $R_2$ by 1 before adding $H(R_2)$ to S; otherwise decrease $R_1$ by 1 before adding $H(R_1)$ to S
4. Go to Step 2

Typically $\alpha$ is set to 50%, such that 50% of the background pixels have red colours within the range of $[R_1, R_2]$. A piecewise linear function may then be used to scale the overall colour range [0, 255]. A general form of this is given by

$$R' = \begin{cases} f_1(R) & 0 \le R < R_1 \\ f_0(R) & R_1 \le R \le R_2 \\ f_2(R) & R_2 < R \le 255 \end{cases}$$

where $f_1(R)$, $f_0(R)$, and $f_2(R)$ are linear and increasing functions that satisfy the following conditions:

$$\begin{cases} f_1(0) \ge 0 \ and \ f_1(R_1) = f_0(R_1) \\ f_0(R_0) = R_0 \\ f_2(R_2) \le 255 and f_2(R_2) = f_0(R_2) \end{cases}$$

The following is an example set of functions that satisfy the above conditions:

$$\begin{cases} f_1(R) = a_1(R - R_1) + [R_0 + a_0(R_1 - R_0)] \\ f_0(R) = R_0 + a_0(R - R_0) \\ f_2(R) = a_2(R - R_2) + [R_0 + a_0(R_2 - R_0)] \end{cases}$$

where

$$\begin{cases} a_0 + (1 - a_0)R_0 / R_1 \leq a_1 \leq 1 \\ 0 \leq a_0 \leq 1 \\ 1 \leq a_2 \leq [255 - R_0 - a_0(R_2 - R_0)]/[255 - R_2] \end{cases}$$

Typically $a_0$ is set to ½ and both $a_1$ and $a_2$ to 1.

Similar scaling functions may be derived and applied to the green and blue colours. These colour transformations may be applied before the difference image is calculated.

Once the segmentation is carried out, the static background may be removed and replaced with a new background image. The new background image may have a large contrast with the foreground objects, thus having a clear cut-out at the boundary around the foreground objects. This may be "softened" by applying a smoothing operation for boundary pixels.

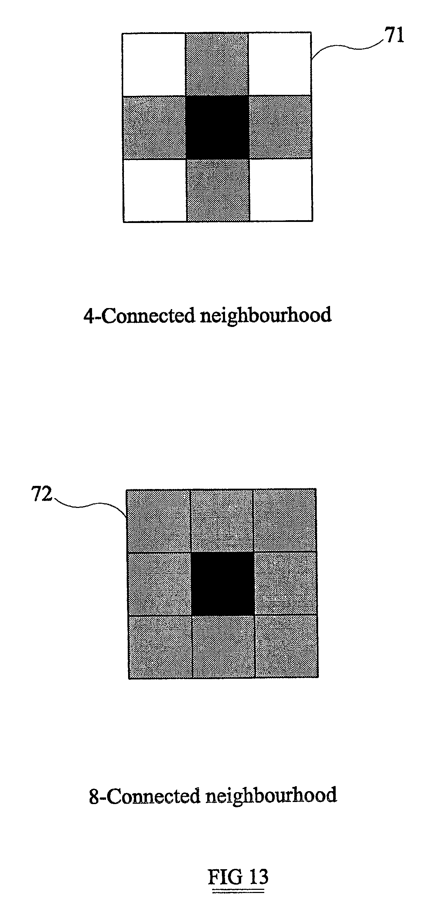

An object pixel is regarded as inside the object if all its adjacent pixels are also foreground pixels. These adjacent pixels may be defined as the 4-connected neighbours as illustrated at 71 in Figure 13 or the 8-connected neighbours as illustrated at 72 in Figure 13. There is no operation required for object pixels inside the object.

If at least one of the adjacent pixels is a background pixel, an object pixel is then regarded as on the boundary. This pixel may be replaced by a new pixel given by:

$$I'(x,y) = \varepsilon I(x,y) + (1-\varepsilon)B'(x,y)$$

where $B'(x,y)$ is the user selected new background image and $\varepsilon$ is a constant which has a typical value of ½.

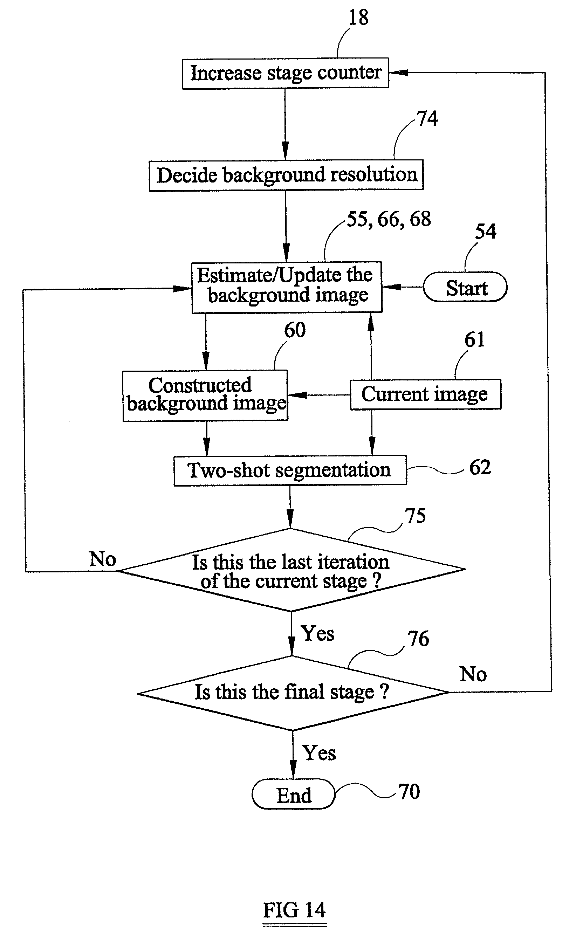

In the embodiment described hereinbefore, the background image is estimated and updated at three different resolutions. This might be extended to more than three stages, each of which has a finer resolution than that of the previous one as shown in Figure 14. This is achieved by changing the block size, starting with the whole image and ending with pixel resolution. The block size might be reduced by a fixed step or by a factor of 2 so that the block size at each stage is half of that of the previous stage. If the image has NxN pixels and N is an integer comprising a power of 2, $i.\,e.2^n$, then the total number of stages will be n+1.

The method shown in Figure 14 begins with the first stage shown at 51 in Figure 3 with the whole of the background region or regions being assumed to have the same colour. A step 75 checks whether each stage has performed the intended number of iterations and, when this is achieved, a step 76 determines whether the final stage has been performed. If not, the stage counter is increased at 18 and the background resolution for the next stage is decided at 74. The background resolution is thus progressively increased for each stage until pixel-level resolution is achieved in the final stage. Thus, each intermediate stage corresponds to the second stage 52 of Figure 3 with one or more block-wise resolutions and the final stage corresponds to the third stage 53 in Figure 3.

The methods described so far are one-frame methods aimed at segmenting a single image. However, the method may be extended to form a one-shot method. The one-frame method may be applied to the first frame, and the background image may then be used to segment the next image. The segmentation for these following images however may comprise only one stage by updating the background image at pixel resolution. The iteration number for the second image may be set to a fixed number L, which has a typical value of 10. The iteration number for the following images may then be reduced to a smaller number k, where k<L. For example, the iteration number In(i) may be given by

$$In(i) = \max\{k,\ L - i + 1\}$$

where i is the image number starting from 0 for the first image.

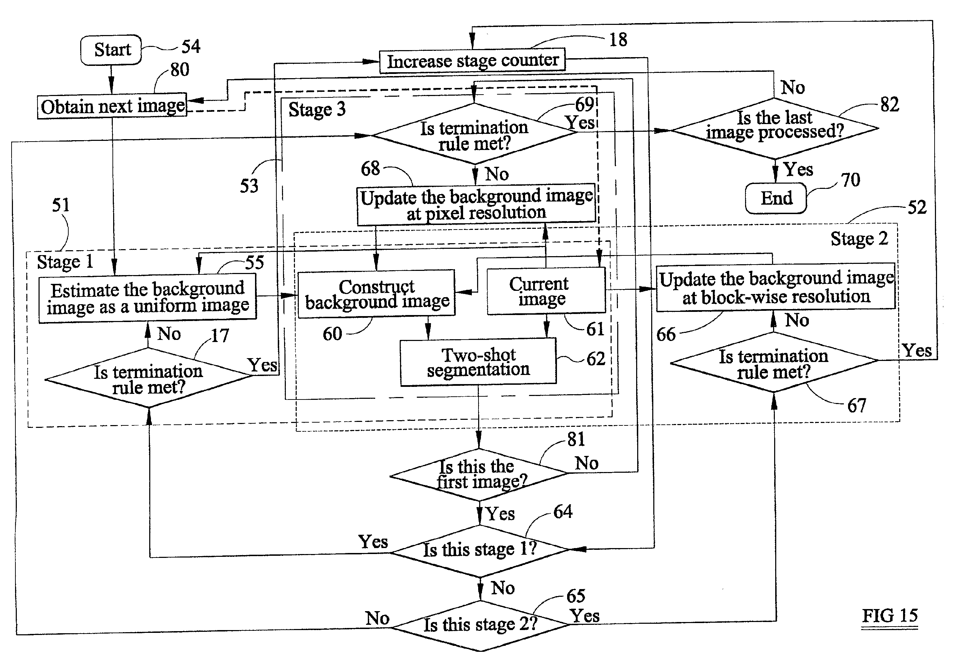

This technique is illustrated in Figure 15, which differs from that of Figure 3 by the addition of steps 80, 81 and 82. The next image in the sequence is obtained at 80 and the three stage segmentation is performed on this image. In particular, the step 81 determines that this is the first image and the steps 64 and 65 ensure that the second and third stages 52 and 53 are performed after the first stage 51.

For all subsequent images, the step 81 causes only the third stage 53 to be performed. This continues until the last image of the sequence is detected in the step 82 and the process ends.

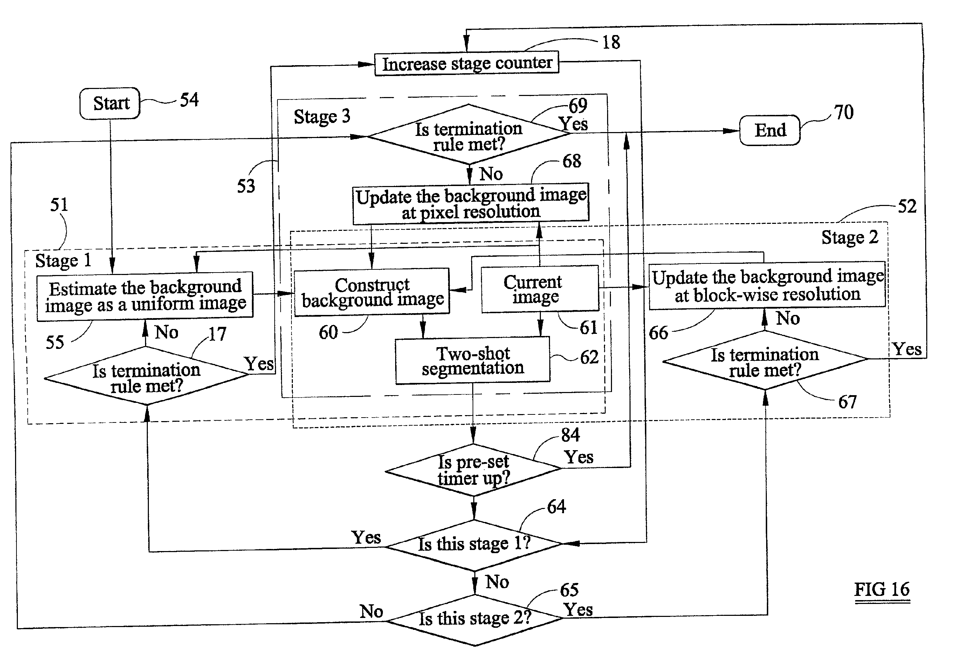

In the embodiments described hereinbefore, the termination rule for each stage was that a predetermined number of iterations had been performed. However, other termination rules may be used and Figure 16 illustrates a method which differs from that shown in Figure 3 in that the method is terminated after a predetermined time even if the three stages have not been completed. In particular, after each segmentation 62, a step 84 tests whether a preset timer has timed out and, if so, the method is immediately ended at 70.

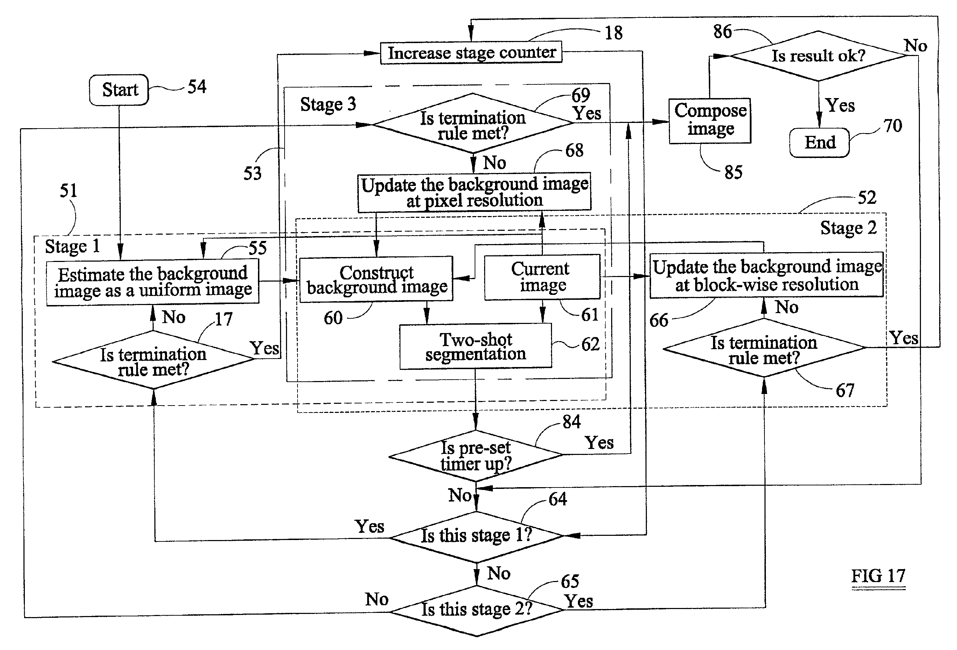

Figure 17 illustrates a method which differs from that shown in Figure 16 in that user interaction is permitted. In particular, after the third stage 53 has been performed, an image is composed at 85 and the result is checked at 86. If the result is acceptable, the process ends at 70. However, if the result is not acceptable, the method is performed again on the image, possibly with further user intervention in order to try to obtain an acceptable result.

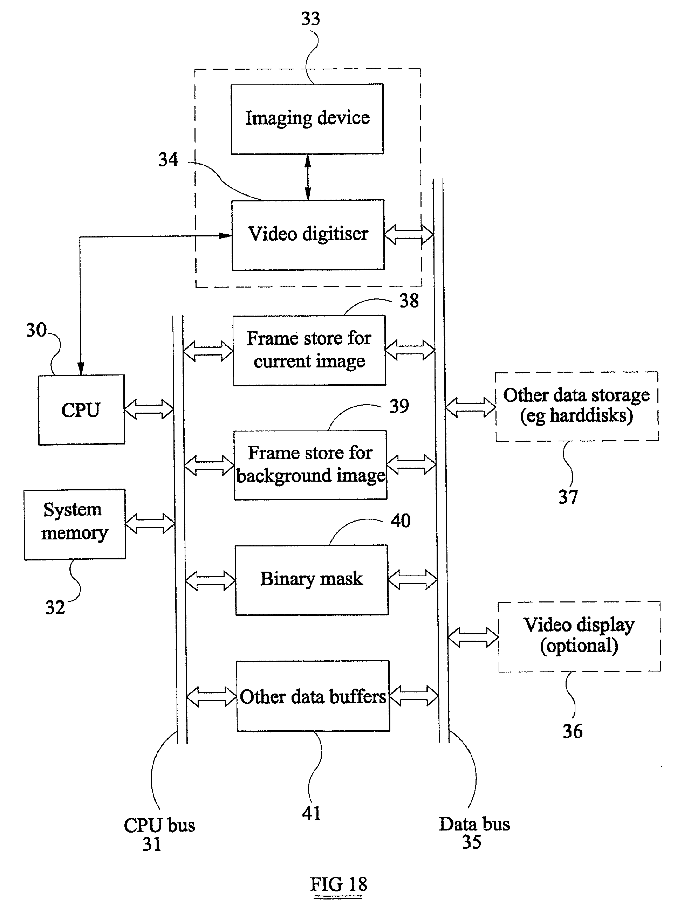

The method may be performed on any suitable apparatus such as that illustrated in Figure 18. A programmed data processor comprises a central processing unit (CPU) 30 connected to a CPU bus 31. A system memory 32 is connected to the bus 31 and contains all of the system software or program for operating the data processor.

The images are obtained by an imaging device 33, such as the Sharp® Internet ViewCam, which is connected to video a digitiser 34 (if the image signal is not already in digital data format) connected to a data bus 35. An optional display device 36 may also be connected to the data bus 35 so that the input may be displayed in full screen or in a window if the output image is also displayed in another window.

Alternatively, the incoming images may be from other sources and may already be in the form of a computer file which may be stored in a hard disk or any other storage device 37 connected to the data bus 35.

The system comprises a frame buffer 38 for storing an incoming image, a frame buffer 39 for the image of the background, a frame buffer 40 for the binary mask and other memory buffers 41 as necessary for temporary data generated during the segmentation process.

The segmented foreground and background regions together with the binary mask may be sent to other devices for further processing or may be stored in other storage devices such as a hard disk.

A composed image may be generated using the segmented foreground region(s) and any user-designated new background image. The new composed image may be displayed on the display device 36 either in full screen or in a window for comparison with the original image as displayed in a separate window.

## Claims

1. A method of segmenting a pixellated image having at least one foreground region and at least one non-occluded background region, comprising the steps of:

   (a) determining (55) a first visual characteristic of the at least one background region;
   (b) generating (60) a first non-occluded background image from the first visual characteristic;
   (c) comparing (11, 12, 13) each of at least some of the pixels of the pixellated image with a corresponding pixel of the first background image; and
   (d) allocating (11, 12, 13) each of the at least some pixels as a foreground or background pixel depending at least partly on the result of the step (c).

2. A method as claimed in claim 1, **characterised in that** the first visual characteristic is a substantially uniform visual characteristic.

3. A method as claimed in claim 2, **characterised in that** the first visual characteristic is a substantially uniform colour.

4. A method as claimed in claim 3, **characterised in that**: each pixel of the pixellated image is represented by a plurality of colour components; the step (a) comprises forming a histogram for each colour component of the number of pixels of at least part of the pixellated image for each value of the colour component and detecting the colour component value of each histogram at which the largest pixel number occurs; and the step (b) comprises ascribing the colour component values to each pixel of the first background image.

5. A method as claimed in claim 4, **characterised in that** the at least part of the pixellated image is selected manually and comprises at least part of the at least one background region.

6. A method as claimed in claim 4, **characterised in that** the pixellated image is of landscape format and the at least part of the pixellated image comprises side portions (57) thereof.

7. A method as claimed in claim 4, **characterised in that** the pixellated image is of portrait format and the at least part of the pixellated image comprises a top portion (58) thereof.

8.  A method as claimed in claim 4, **characterised in that** the pixellated image is of portrait format and the at least part of the pixellated image comprises top corner portions (59) thereof.

9.  A method as claimed in any one of the preceding claims, **characterised in that** which the step (b) comprises ascribing the first visual characteristic to each pixel of the first background image.

10. A method as claimed in any one of the preceding claims, **characterised by** comprising repeating the step (a) to (d) at least once with the step (a) comprising determining the first visual characteristic of at least some of the pixels allocated as background pixels in the preceding step (d).

11. A method as claimed in any one of the preceding claims, **characterised by** comprising the subsequent steps of:

    (e) generating (60) a second non-occluded background image comprising a plurality of blocks of pixels, the pixels of each block having a second substantially uniform visual characteristic;
    (f) comparing (11, 12, 13) each of at least some of the pixels of the pixellated image with a corresponding pixel of the second background image; and
    (g) allocating (11, 12, 13) each of the at least some pixels as a foreground or background pixel depending at least partly on the result of the step (f).

12. A method as claimed in claim 11, **characterised in that** each second visual characteristic is a substantially uniform colour.

13. A method as claimed in claim 11 or 12, **characterised in that** each second visual characteristic is determined at least partly by the corresponding visual characteristic of each pixel of the pixellated image corresponding to a pixel of the block and allocated as a background pixel.

14. A method as claimed in any one of claims 11 to 13, **characterised in that** each second visual characteristic is determined at least partly by the first visual characteristic.

15. A method as claimed in claim 14 when dependent on claims 13 and 9, **characterised in that** the second visual characteristic of each block comprises a linear combination of the first visual characteristic and the corresponding visual characteristics of the pixels of the pixellated image corresponding to pixels of the block and allocated as background pixels.

16. A method as claimed in claim 15 or 13 or in claim 14 when dependent on claim 13, **characterised by** comprising repeating the steps (e) to (g) at least once with each second visual characteristic being determined at least partly by the corresponding visual characteristics of each pixel of the pixellated image corresponding to a pixel of the block and allocated as a background pixel in the preceding step (g).

17. A method as claimed in any one of claims 11 to 16, **characterised in that** each of the blocks comprises a predetermined number of pixels.

18. A method as claimed in claim 17, **characterised in that** each of the blocks comprises a square array of pixels.

19. A method as claimed in claim 17 or 18, **characterised by** comprising at least one repetition, the or each repetition comprising performing the steps (e) to (g) at least once with a reduced number of pixels in each block.

20. A method as claimed in any one of the preceding claims, **characterised by** comprising the subsequent steps of:

    (h) generating a third non-occluded background image, in which each pixel corresponding to an allocated background pixel of the pixellated image has a third visual characteristic at least partly determined by the corresponding visual characteristic of the allocated background pixel;
    (i) comparing (11, 12, 13) each of at least some of the pixels of the pixellated image with a corresponding pixel of the third background image; and
    (j) allocating (11, 12, 13) each of the at least some pixels as a foreground or background pixel depending at least partly on the result of the step (i).

**21.** A method as claimed in claim 20, **characterised in that** the third visual characteristic is colour.

**22.** A method as claimed in claim 20 or 21, **characterised in that** the third characteristic of each pixel of the third background image corresponding to an allocated background pixel comprises a linear combination of the corresponding visual characteristic of the allocated background pixel and the first or second visual characteristic.

**23.** A method as claimed in any one of claims 20 to 22, **characterised in that**, in the step (h), each pixel of the third background image corresponding to an allocated foreground pixel of the pixellated image has the first or second visual characteristic.

**24.** A method as claimed in any one of claims 20 to 23, **characterised by** comprising repeating the steps (h) to (j) at least once with the background pixel allocation in the step (h) being determined in the preceding step (j).

**25.** A method as claimed in any one of claims 1 to 10, **characterised in that** the steps (c) and (d) comprise the steps of:

(k) selecting at least one part of the at least one background region;
(1) deriving from values of pixels of the at least one part a first threshold such that a first predetermined proportion of the pixels have values below the first threshold;
(m) forming a difference image as a difference between each pixel of the pixellated image and a corresponding pixel of the first background image; and
(n) allocating each difference image pixel as a background pixel if the value of the difference image pixel is below the first threshold and the values of more than a first predetermined number of neighbouring difference image pixels are below the first threshold.

**26.** A method as claimed in any one of claims 11 to 19, **characterised in that** the steps (f) and (g) comprise the steps of:

(k) selecting at least part of the at least one background region;
(1) deriving from values of pixels of the at least one part a first threshold such that a first predetermined proportion of the pixels have values below the first threshold;
(m) forming a difference image as a difference between each pixel of the pixellated image and a corresponding pixel of the second background image; and
(n) allocating each difference image pixel as a background pixel if the value of the difference image pixel is below the first threshold and the values of more than a first predetermined number of neighbouring difference image pixels are below the first threshold.

**27.** A method as claimed in any one of claims 20 to 24, **characterised in that** the steps (i) and (j) comprise the steps of:

(k) selecting at least one part of the at least one background region;
(l) deriving from values of pixels of the at least one part a first threshold such that a first predetermined proportion of the pixels have values below the first threshold;
(m) forming a difference image as a difference between each pixel of the pixellated image and a corresponding pixel of the third background image; and
(n) allocating each difference image pixel as a background pixel if the value of the difference image pixel is below the first threshold and the values of more than a first predetermined number of neighbouring difference image pixels are below the first threshold.

**28.** A method as claimed in any one of claims 25 to 27, **characterised in that** the first predetermined proportion is between 0.5 and 1.

**29.** A method as claimed in claim 28, **characterised in that** the first predetermined proportion is substantially equal to 0.75.

**30.** A method as claimed in claim 28 or 29, **characterised in that** the first predetermined number is substantially equal to half the number of neighbouring difference image pixels.

**31.** A method as claimed in any one of claims 25 to 30, **characterised in that** the steps (k) to (n) are repeated at least once with the at least one part in the step (k) comprising the background pixels allocated in the preceding step (n).

**32.** A method as claimed in claim 31, **characterised in that** each step (n) comprises forming a first initial histogram of values of the difference image pixels allocated as background pixels and the step (1) derives the first threshold from a first resulting histogram which comprises the sum of the first initial histogram formed in the preceding step (n) and a first predetermined fraction less than one of the first resulting histogram of the preceding step (1).

**33.** A method as claimed in claim 32, **characterised in that** the first predetermined fraction is a half.

**34.** A method as claimed in any one of claims 25 to 35, **characterised by** comprising the steps of:

(o) selecting at least one part of the at least one foreground region;
(p) deriving from values of pixels of the at least one part a second threshold such that a second predetermined proportion of the pixels have values above the second threshold; and
(q) allocating each difference image pixel, which is not allocated as a background pixel, as a foreground pixel if the value of the difference image pixel is above the second threshold and the values of more than a second predetermined number of neighbouring difference image pixels are above the second threshold.

**35.** A method as claimed in claim 34, **characterised in that** the second predetermined proportion is between 0.5 and 1.

**36.** A method as claimed in claim 35, **characterised in that** the second predetermined proportion is substantially equal to 0.75.

**37.** A method as claimed in claim 35 or 36, **characterised in that** the second predetermined number is substantially equal to half the number of neighbouring difference image pixels.

**38.** A method as claimed in any one of claims 34 to 37, **characterised in that** the steps (o) to (q) are repeated at least once with the at least one part in the step (o) comprising the foreground pixels allocated in the preceding step (q).

**39.** A method as claimed in claim 38, **characterised in that** each step (q) comprises forming a second initial histogram of values of the difference image pixels allocated as foreground pixels and the step (p) derives the second threshold from a second resulting histogram which comprises the sum of the second initial histogram formed in the preceding step (q) and a second predetermined fraction less than one of the second resulting histogram of the preceding step (p).

**40.** A method as claimed in claim 39, **characterised in that** the second predetermined fraction is a half.

**41.** A method as claimed in any one of claims 34 to 40, **characterised by** comprising allocating each difference image pixel, which is not allocated as a foreground or background pixel, as a candidate background pixel if a value of the difference image pixel is less than a third threshold.

**42.** A method as claimed in claim 41, characterise in that the third threshold is between the first and second thresholds.

**43.** A method as claimed in claim 42, **characterised in that** the third threshold is the arithmetic mean of the first and second thresholds.

**44.** A method as claimed in any one of claims 41 to 43, **characterised by** comprising allocating each difference image pixel, which is not allocated as a foreground or background pixel, as a background pixel if more than a third predetermined number of the neighbouring pixels are allocated as background pixels or as candidate background pixels.

**45.** A method as claimed in claim 44, **characterised in that** the third predetermined number is half the number of neighbouring difference image pixels.

**46.** A method as claimed in claim 44 or 45, **characterised by** comprising allocating each difference image pixel, which is not allocated as a foreground or background pixel, as a foreground pixel.

**47.** A method as claimed in any one of claims 25 to 46, **characterised by** comprising forming a binary mask whose elements correspond to difference image pixels, each element having a first value if the corresponding difference image pixel is allocated as a background pixel and a second value different from the first value if the corresponding difference image pixel is allocated as a foreground pixel.

48. An apparatus for segmenting a pixellated image having at least one foreground region partially occluding a background and at least one non-occluded background region, **characterised by** comprising means for determining a visual characteristic of the at least one background region, means for generating a non-occluded background image from the visual characteristic, means for comparing each of at least some of the pixels of the pixellated image with a corresponding pixel of the background image, and means for allocating each of the at least some pixels as a foreground or background pixel depending at least partly on the comparing means.

49. An apparatus for segmenting a pixellated image, **characterised by** comprising a programmable data processor and a program for controlling the data processor to perform a method as claimed in any one of claims 1 to 47.

50. A storage medium **characterised by** containing a program for controlling a data processor to perform a method as claimed in any one of claims 1 to 47.

51. A program for controlling a data processor to perform a method as claimed in any one of claims 1 to 47.

52. An image capture device **characterised by** including an apparatus as claimed in claim 48 or 49.

FIG 1

FIG 2

FIG 3

hr (r)

0      Ro

<u>FIG 4</u>

hr (r)

0      Ro

<u>FIG 5</u>

57
Regions for initially
calculating a noise histogram

56
Region for initially
calculating a signal histogram

FIG 6

58
Regions for initially
calculating a noise histogram

Region for initially
calculating a signal histogram
56

FIG 7

59
Regions for initially
calculating a noise histogram

Region for initially
calculating a signal histogram
56

FIG 8

FIG 9

30

Background        Background + foreground

60                                           61

Generate difference image     5

9
Regions for initially
calculating a noise histogram

8

Region for initially
calculating a signal histogram
10

FIG 10

FIG 11

FIG 12

4-Connected neighbourhood

8-Connected neighbourhood

FIG 13

18

Increase stage counter

74

Decide background resolution

55, 66, 68

54

Estimate/Update the background image ← Start

60

61

Constructed background image ← Current image

Two-shot segmentation — 62

75

No ← Is this the last iteration of the current stage ?

Yes

76

Is this the final stage ? → No

Yes

End — 70

FIG 14

FIG 15

FIG 16

EP 1 274 251 A2

Increase stage counter — 18

86 — Is result ok? — No

Start — 54

Stage 3

69
Yes

Is termination rule met?

Compose image

End — 70

53

No — 68

85

51

Update the background image at pixel resolution

52

Stage 2

Stage 1

55

Estimate the background image as a uniform image

Construct background image

Current image

Update the background image at block-wise resolution

No

17

60

61

66

No

Yes

Is termination rule met?

Two-shot segmentation — 62

Is termination rule met?

67

84

Yes

Is pre-set timer up?

No

64

Yes

Is this stage 1?

No

65

No

Is this stage 2?

Yes

FIG 17

33

Imaging device

34

Video digitiser

30

CPU

System memory

32

38

Frame store for current image

39

Frame store for background image

40

Binary mask

Other data buffers

Other data storage (eg harddisks)

37

Video display (optional)

36

41

CPU bus
31

Data bus
35

FIG 18